# EUROPEAN PATENT APPLICATION

(11) **EP 3 144 921 A1**
(43) Date of publication of application: **22.03.2017**
(21) Application number: 16188916.7
(22) Date of filing: 15.09.2016
(51) Int. Cl.: G08G 5/00, G01S 5/02, G07C 5/00, B64D 45/00

(54) **CONTROLLER FOR AN AIRCRAFT TRACKER**

(30) Priority: 18.09.2015 US 201514858235
(71) Applicant: The Boeing Company, Chicago, IL 60606-2016 (US)
(72) Inventor: ADLER, Charles Otis, Chicago, IL 60606-2016 (US); EIGLE, Ted, Chicago, IL 60606-2016 (US); RICHARDS, William Raymond, Chicago, IL 60606-2016 (US); MURPHY, Timothy Allen, Chicago, IL 60606-2016 (US); ROBERSON, John Harvey, Chicago, IL 60606-2016 (US); THALAKOTTUR, Thomas Jose, Chicago, IL 60606-2016 (US); FRICKS, Ricardo Messias, Chicago, IL 60606-2016 (US); KHALIL, Fadl Ibrahim, Chicago, IL 60606-2016 (US); WALSTROM, Steven Mark, Chicago, IL 60606-2016 (US); HOLTON, Daniel Bruce, Chicago, IL 60606-2016 (US); TURNER, Jessie, Chicago, IL 60606-2016 (US); JACKSON, Timothy Edward, Chicago, IL 0606-2016 (US)
(74) Representative: Boult Wade Tennant

(57) **Abstract**

A method, apparatus, and aircraft tracker system for reporting state information for an aircraft. A state of the aircraft is identified using sensor data received from an aircraft sensor system in the aircraft. The state information is transmitted at a reporting rate set using the state of the aircraft identified from the sensor data, at least one of a crew command or a ground command when at least one of the crew command is received from a crew interface or the ground command is received from a ground source, and a policy defining priorities for reporting that are based on at least one of the crew command, the ground command, or the state of the aircraft identified from the sensor data.

## Description

### BACKGROUND

The present disclosure relates generally to aircraft and, in particular, to an aircraft tracking system. More specifically, the present disclosure relates to a method and apparatus for controlling operation of an aircraft tracking system.

Many aircraft carry systems that provide broadcasts of aircraft location for tracking and emergency location purposes. Aircraft systems that provide tracking or an emergency location function include distress radio beacons such as emergency locator transmitters (ELTs), transponder systems such as the Automatic Dependent Surveillance - Broadcast (ADS-B) systems, aircraft communication systems implementing Aircraft Communications Addressing and Reporting System (ACARS) based position reporting systems and specialized tracking systems providing dedicated communications links and tracking capabilities. These existing tracking and emergency location systems respond to a variety of control inputs to determine their reporting rates and the content of their reports is generally responsive to some combination of flight crew inputs, aircraft state inputs and, in some cases, ground based command inputs.

Emergency locator transmitters systems allow for activation and deactivation of distress beacons by crew members of the aircraft. Emergency locator transmitters include internal sensors to detect high temperatures and high decelerations indicative of a crash and use these to automatically trigger transmissions. These automatically triggered transmissions can be deactivated by the crew of the aircraft. For example, if transmissions are set off by a hard landing, they may be deactivated by the crew. The system may use aircraft inputs to provide aircraft location data in the distress broadcasts but are otherwise autonomous. These systems do not have ground based command inputs. In next generation emergency locator transmitters, which are desired to be more tamper proof, it is also desirable to use aircraft state data to trigger broadcasts prior to an incident.

Transponder systems such as the Automatic Dependent Surveillance - Broadcast (ADS-B) broadcast aircraft location and state data to ground based, airborne or satellite based receivers. These systems allow a crew member to enter distress codes. These systems have no autonomy and are completely dependent on other aircraft systems. In some cases, these systems allow the crew members to turn off the overall system to stop the position broadcasts.

Specialized aircraft tracking systems can use existing or dedicated aircraft radio or satellite communications links to send periodic aircraft position reports. These systems also may be programmed to use aircraft state and position information from aircraft avionics systems to trigger higher reporting rates and incident reports. These systems typically support crew activation and deactivation and ground based commands. These systems may have internal sensors to detect aircraft position and state variables. These existing systems may have limited tamper-proofing functions and may have varying responsiveness to crew member and ground control inputs.

Limitations for these existing systems include having limited or no autonomy from other aircraft systems, providing limited or no functions to prevent the flight crew from disabling the tracking functionality, such as tamper-proofing, the lack of the ability of significant system stakeholders such as crew members of the aircraft, ground controllers, or a combination thereof to trigger transmissions, limited or no ability to autonomously detect and trigger broadcasts on indications of aircraft abnormal conditions and providing limited or no support for higher level system control options.

Therefore, it would be desirable to have a method and apparatus that take into account one or more of the issues discussed above, as well as other possible issues. For example, it would be desirable to have a method and apparatus that overcome a technical problem with tampering with emergency locator transmitters. As another example, it would be desirable to have a method and apparatus that overcome a technical problem the economy in controlling reporting information about aircraft.

### SUMMARY

An embodiment of the present disclosure provides an apparatus comprising an aircraft tracker. The aircraft tracker is configured to identify a state of an aircraft using sensor data received from an aircraft sensor system in the aircraft; receive a crew command from a crew interface; receive a ground command from a ground source; and transmit state information at a reporting rate set using the state of the aircraft identified from the sensor data, at least one of the crew command or the ground command when the at least one of the crew command or the ground command is received, and a policy defining priorities for reporting that are based on at least one of the crew command, the ground command, or the state of the aircraft identified from the sensor data.

Another embodiment of the present disclosure provides an aircraft tracking system comprising a housing that is tamper-resistant, a sensor system, a behavior analyzer, a state information reporter, and a communications system located in the housing. The sensor system is configured to generate sensor data about an aircraft. The behavior analyzer is configured to identify the state of the aircraft using the sensor data. The state information reporter is configured to report the state information at the reporting rate set using the state of the aircraft identified from the sensor data, at least one of a crew command or a ground command when the at least one of the crew command or the ground command is received, and a location of the aircraft. The communications system is configured to receive the ground command and send the state information transmitted by the state information reporter.

Yet another embodiment of the present disclosure provides a method for reporting state information for an aircraft. A state of the aircraft is identified using sensor data received from an aircraft sensor system in the aircraft. The state information is transmitted at a reporting rate set using the state of the aircraft identified from the sensor data, at least one of a crew command or a ground command when at least one of the crew command is received from a crew interface or the ground command is received from a ground source, and a policy defining priorities for reporting that are based on at least one of the crew command, the ground command, or the state of the aircraft identified from the sensor data.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft operating environment in accordance with an illustrative embodiment;
**Figure 2** is an illustration of a block diagram of an aircraft tracking system in accordance with an illustrative embodiment;
**Figure 3** is an illustration of a block diagram of sensor data in accordance with an illustrative embodiment;
**Figure 4** is an illustration of a block diagram of state information in accordance with an illustrative embodiment;
**Figure 5** is an illustration of a block diagram of an aircraft tracker in accordance with an illustrative embodiment;
**Figure 6** is an illustration of a block diagram of data flow for a transmit state identifier that identifies the state of an aircraft in accordance with an illustrative embodiment;
**Figure 7** is an illustration of a table identifying whether state information should be transmitted in which a flight crew command is given the highest priority in accordance with an illustrative embodiment;
**Figure 8** is an illustration of a table identifying whether state information should be transmitted in which a ground command is given the highest priority in accordance with an illustrative embodiment;
**Figure 9** is an illustration of a block diagram of data flow for a behavior analyzer identifying a state of an aircraft in accordance with an illustrative embodiment;
**Figure 10** is an illustration of a block diagram of an aircraft state identifier in accordance with an illustrative embodiment;
**Figure 11** is an illustration of a table of trigger conditions for excessive banking in accordance with an illustrative embodiment;
**Figure 12** is an illustration of a table of trigger conditions for excessive pitch in accordance with an illustrative embodiment;
**Figure 13** is an illustration of a table of trigger conditions for excessive speed in accordance with an illustrative embodiment;
**Figure 14** is an illustration of a table of states for altitudes in accordance with an illustrative embodiment;
**Figure 15** is an illustration of a table of trigger conditions for track changes in accordance with an illustrative embodiment;
**Figure 16** is an illustration of a block diagram of a rate identifier in accordance with an illustrative embodiment;
**Figure 17** is an illustration of a block diagram of a navigation data handler in accordance with an illustrative embodiment;
**Figure 18** is an illustration of a block diagram of an aircraft tracking system in accordance with an illustrative embodiment;
**Figure 19** is an illustration of a flowchart of a process for reporting state information in accordance with an illustrative embodiment;
**Figure 20** is an illustration of a flowchart of a process for reporting state information in accordance with an illustrative embodiment;
**Figure 21** is an illustration of a flowchart of a process for identifying the state of an aircraft in accordance with an illustrative embodiment;
**Figure 22** is an illustration of a flowchart of a process for identifying a reporting rate in accordance with an illustrative embodiment;
**Figure 23** is an illustration of a flowchart of a process for identifying state information in accordance with an illustrative embodiment;
**Figure 24** is an illustration of a block diagram of an aircraft manufacturing and service method in accordance with an illustrative embodiment; and
**Figure 25** is an illustration of a block diagram of an aircraft in accordance with an illustrative embodiment.

### DETAILED DESCRIPTION

The illustrative embodiments recognize and take into account one or more different considerations. For example, the illustrative embodiments recognize and take into account that current aircraft tracking systems such as emergency location transmitters enable a crew member to report a distress situation using a crew interface for an emergency location transmitter in the aircraft. The illustrative embodiments recognize and take into account that the crew interface is often at a switch located on the flight deck of the aircraft or in some other suitable location.

The illustrative embodiments recognize and take into account that this type of interface is subject to tampering. For example, the illustrative embodiments recognize and take into account that someone other than a crew member may turn off the reporting by the emergency locator transmitter. Also, the illustrative embodiments recognize and take into account that someone other than a crew member may disable the switch such that the emergency locator transmitter cannot be turned on to report the distress situation.

The illustrative embodiments recognize and take into account that it would be desirable to have a method and apparatus that reduce the possibility of tampering. For example, the illustrative embodiments provide a method and apparatus for transmitting status information about the aircraft in a manner that reduces concerns with tampering. In one illustrative example, an apparatus comprises an aircraft tracker. The aircraft tracker is configured to identify a state of an aircraft using sensor data received from an aircraft sensor system in an aircraft. The aircraft tracker is also configured to receive a crew command from a crew interface and receive a ground command from a ground source. The aircraft tracker is configured to transmit the state information at a reporting rate set using a state of the aircraft identified from the sensor data and at least one of the crew command or the ground command when at least one of the crew command or the ground command is received. In other words, the aircraft tracker sets the reporting rate using just the aircraft state when the crew command and the ground command are not received.

As used herein, the phrase "at least one of," when used with a list of items, means different combinations of one or more of the listed items may be used and only one of each item in the list may be needed. In other words, "at least one of" means any combination of items and number of items may be used from the list, but not all of the items in the list are required. The item may be a particular object, thing, or a category.

For example, without limitation, "at least one of item A, item B, or item C" may include item A, item A and item B, or item B. This example also may include item A, item B, and item C or item B and item C. Of course, any combinations of these items may be present. In some illustrative examples, "at least one of" may be, for example, without limitation, two of item A; one of item B; and ten of item C; four of item B and seven of item C; or other suitable combinations.

The aircraft tracking system in the illustrative examples includes a control system that addresses current issues and limitations with current tracker systems. Further, the aircraft tracking system in the list of examples also addresses the requirements common to tracking and distress systems to provide an integrated and comprehensive control solution for an autonomous distress tracker system.

This control system in the aircraft tracking system in the list of examples has a high responsiveness to aircrew distress inputs and ground commands with strong tamperproof functions. The control system integrates multiple external and internal aircraft state data sources and combines these with comprehensive policies to determine high level aircraft states and associated transmission states and reporting rates. The control system provides integrated high level transmit on/off functionality in a tamperproof way to support regulatory requirements and user privacy needs.

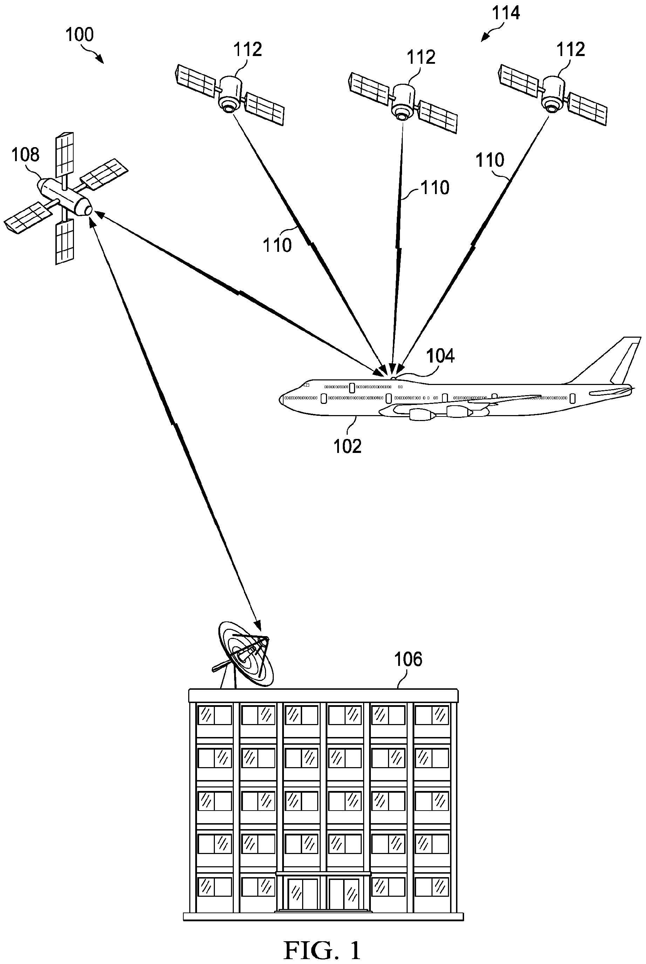

With reference now to the figures and, in particular, with reference to **Figure 1****,** an illustration of an aircraft operating environment is depicted in accordance with an illustrative embodiment. Aircraft operating environment **100** may include any appropriate environment in which aircraft **102** may be operated in any appropriate manner. For example, without limitation, aircraft **102** may be in flight in aircraft operating environment **100.**

Aircraft **102** may be any appropriate type of aircraft that may be configured to perform any appropriate operation or mission in aircraft operating environment **100.** For example, without limitation, aircraft **102** may be a commercial passenger aircraft, a cargo aircraft, a military aircraft, or any other appropriate type of aircraft. Further, aircraft **102** may be a fixed wing aircraft, a rotary wing aircraft, or a lighter-than-air aircraft. Still further, aircraft **102** may be a manned aircraft or an unmanned aircraft.

In accordance with an illustrative embodiment, aircraft **102** may include tracking device **104.** For example, without limitation, tracking device **104** may be attached to the skin of aircraft **102** on the outside of aircraft **102.** In accordance with an illustrative embodiment, tracking device **104** may be configured to automatically determine the position of aircraft **102** when aircraft **102** is in flight in aircraft operating environment **100** and to automatically send position information identifying the position of aircraft **102** to receiving station **106** via satellite **108.**

Tracking device **104** may be configured to identify the position of aircraft **102** using navigation signals **110** received from a number of navigation system satellites **112** in satellite navigation system **114** in a known manner. As used herein, a "number of," when used with reference to items, means one or more items. For example, a number of navigation system satellites **112** is one or more of navigation system satellites **112.**

Tracking device **104** may use navigation signals **110** received from more than three navigation system satellites **112** in satellite navigation system **114** to determine the position of aircraft **102.** For example, without limitation, navigation system satellites **112** may include satellites in satellite navigation system **114** such as the Global Positioning System (GPS), the Global Navigation Satellite System (GLONASS), other appropriate satellite navigation systems, or various combinations of satellite navigation systems that may be used by tracking device **104** to determine the position of aircraft **102.**

Satellite **108** may comprise any appropriate satellite or plurality of satellites for establishing a communications link between tracking device **104** and receiving station **106** for sending position information identifying the position of aircraft **102** from tracking device **104** to receiving station **106.** For example, without limitation, satellite **108** may be a communications satellite in low Earth orbit. A satellite in low Earth orbit is in orbit around the Earth with an altitude between approximately 160 kilometers and 2000 kilometers. For example, without limitation, satellite **108** may be a satellite in the Iridium satellite constellation operated by Iridium Communications. A satellite in the Iridium satellite constellation is referred to herein as an Iridium satellite or an Iridium communications satellite.

Information other than position information may be sent from tracking device **104** on aircraft **102** to receiving station **106** via satellite **108.** For example, without limitation, tracking device **104** may be configured to send an alert to receiving station **106** via satellite **108** when aircraft **102** is determined to be in distress. Additionally, instructions for controlling operation of tracking device **104** may be sent from receiving station **106** to tracking device **104** on aircraft **102** via satellite **108.** For example, without limitation, instructions for controlling when or how often position information is sent from tracking device **104** may be sent from receiving station **106** to tracking device **104** via satellite **108.**

For example, without limitation, receiving station **106** may be located on the ground. Receiving station **106** may be part of or otherwise associated with any appropriate facility or entity that may be associated with the operation of aircraft **102.** For example, without limitation, receiving station **106** may be operated by or for an airline that operates aircraft **102.** For example, without limitation, receiving station **106** may be part of or associated with a global aircraft tracking system.

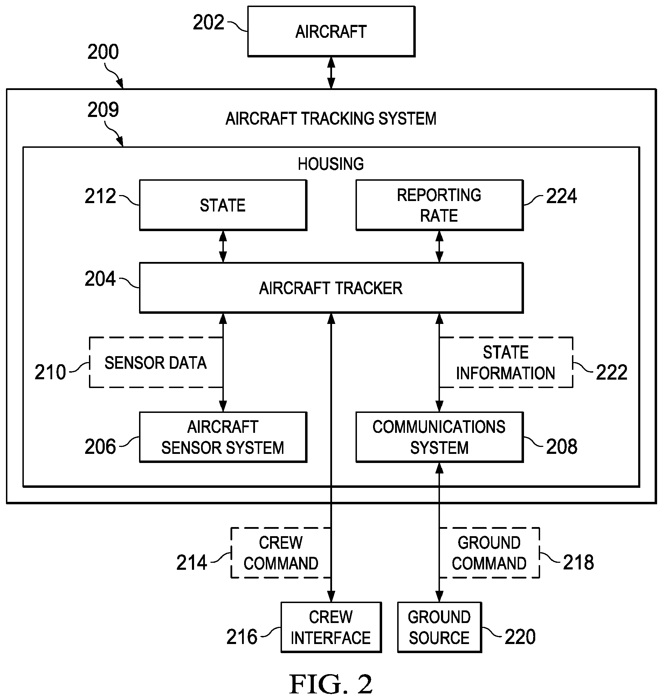

With reference now to **Figure 2****,** an illustration of a block diagram of an aircraft tracking system is depicted in accordance with an illustrative embodiment. Aircraft tracking system **200** is an example of components that may be used in tracking device **104** shown on aircraft **102** in **Figure 1****.**

As depicted, aircraft tracking system **200** is associated with aircraft **202.** When one component is "associated" with another component, the association is a physical association. For example, a first component, aircraft tracking system **200,** may be considered to be physically associated with a second component, aircraft **202,** by at least one of being secured to the second component, bonded to the second component, mounted to the second component, welded to the second component, fastened to the second component, or connected to the second component in some other suitable manner. The first component also may be connected to the second component using a third component. The first component may also be considered to be physically associated with the second component by being formed as part of the second component, extension of the second component, or both.

In the illustrative example, aircraft tracking system **200** is comprised of a number of different components. As depicted, aircraft tracking system **200** includes aircraft tracker **204,** aircraft sensor system **206,** communications system **208,** and housing **209.**

Aircraft sensor system **206** is a hardware system that includes one or more sensors. Aircraft sensor system **206** generates sensor data **210** about at least one of aircraft **202,** the environment inside aircraft **202,** or the environment around aircraft **202.**

Aircraft sensor system **206** may include one or more sensors selected from at least one of a satellite navigation system, an inertial measurement unit, an accelerometer system, a temperature sensor, a pressure sensor, an airspeed sensor, or other suitable types of sensors. Sensor data **210** may include at least one of a location of aircraft **202,** altitude, attitude, power information, a number of parameters for a maneuver performed by aircraft **202,** airspeed, roll angle, roll rate, pitch angle, pitch rate, pressure, temperature, fuel use, or other suitable types of data. In the illustrative example, power information may include the amount of power and the source of power. For example, the source of power may be whether power is received from the primary power source, a secondary power source, or an internal battery.

In the illustrative example, communications system **208** is a hardware system. Communications system **208** may include at least one of a satellite communications system, a radio frequency communication system, a high frequency global communication system (HFGCS), a very high frequency (VHF) radio, or some other suitable type of system.

As depicted, aircraft tracker **204** is a control system for aircraft tracking system **200** and may be implemented in software, hardware, firmware, or a combination thereof. When software is used, the operations performed by aircraft tracker **204** may be implemented in program code configured to run on hardware, such as a processor unit. When firmware is used, the operations performed by aircraft tracker **204** may be implemented in program code and data and stored in persistent memory to run on a processor unit. When hardware is employed, the hardware may include circuits that operate to perform the operations in aircraft tracker **204.**

In the illustrative examples, the hardware may take the form of a circuit system, an integrated circuit, an application-specific integrated circuit (ASIC), a programmable logic device, or some other suitable type of hardware configured to perform a number of operations. With a programmable logic device, the device may be configured to perform the number of operations. The device may be reconfigured at a later time or may be permanently configured to perform the number of operations. Programmable logic devices include, for example, a programmable logic array, programmable array logic, a field programmable logic array, a field programmable gate array, and other suitable hardware devices. Additionally, the processes may be implemented in organic components integrated with inorganic components and may be comprised entirely of organic components excluding a human being. For example, the processes may be implemented as circuits in organic semiconductors.

During operation of aircraft **202,** aircraft tracker **204** identifies state **212** of aircraft **202.** Aircraft tracker **204** identifies state **212** using sensor data **210** received from aircraft sensor system **206** in aircraft **202.**

Aircraft tracker **204** receives crew command **214** from crew interface **216.** As depicted, crew interface **216** generates crew command **214** and sends crew command **214** to aircraft tracker **204.** As depicted, a crew member may operate crew interface **216** to generate crew command **214.** Aircraft tracker **204** also receives ground command **218** from ground source **220** through communications system **208.** In the illustrative example, ground command **218** may be received using, for example, satellite communications with communications system **208** including a satellite navigation system receiver and one or more antennas.

In the illustrative example, ground command **218** is received in real time. In other words, ground command **218** is sent to aircraft tracking system **200** as quickly as possible without intended delay from ground source **220.**

In the illustrative example, crew interface **216** is a physical device and may take a number of different forms. For example, crew interface **216** may be a physical switch in the flight deck, a control displayed on a touchscreen, a part of a multifunction display, or some other suitable type of interface.

In this illustrative example, ground command **218** is received through communications system **208.** The communication may be with, for example, receiving station **106** in **Figure 1****.** The ground command may be sent by an airline, an air traffic controller, or some other suitable entity through receiving station **106.**

In the illustrative example, aircraft tracker **204** transmits state information **222** at reporting rate **224** set using state **212** of aircraft **202** identified from sensor data **210** and at least one of crew command **214** or ground command **218** when at least one of crew command **214** or ground command **218** is received. The transmission of state information **222** is performed using communications system **208.** In this illustrative example, reporting rate **224** is set autonomously by aircraft tracker **204.** In other words, reporting rate **224** may be set automatically based on sensor data **210.** This timing may be supplemented by input through crew command **214** and ground command **218.** Further, this type of setting of reporting rate **224** may reduce tampering. For example, the ability of a crew to disable reporting by aircraft tracker **204** is limited or eliminated using aircraft tracker **204.**

In the illustrative example, housing **209** is a physical structure that holds aircraft tracker **204,** aircraft sensor system **206,** and communications system **208.** Housing **209** is designed to be tamper-resistant. For example, in being tamper-resistant, housing **209** is designed to prevent or reduce an ability of an unauthorized person to access or control aircraft tracker **204,** aircraft sensor system **206,** and communications system **208.** Additionally, housing **209** may also be resistant to the environment around the aircraft **202.**

In one illustrative example, one or more technical solutions are present that overcome a technical problem with tampering with emergency locator transmitters. One or more technical solutions are also present that overcome a technical problem with autonomy in reporting state information **222** for aircraft **202.** Aircraft tracker **204** manages reporting of state information **222** based on the source of commands received by aircraft tracker **204** and state **212** identified for aircraft **202.** Increased autonomy is present in which aircraft tracker **204** reports state information **222** and with a desired level of autonomy. For example, aircraft tracker **204** sets reporting rate **224** for state information **222** regardless of whether crew command **214** or ground command **218** is received. Further, the amount of influence that crew command **214** or ground command **218** may have on reporting rate **224** is controlled by aircraft tracker **204.** In other words, aircraft tracker **204** may be configured to reduce tampering that may occur through crew command **214** and ground command **218.**

As a result, one or more technical solutions may provide a technical effect in which more accurate tracking of aircraft **202** occurs during operation of aircraft **202.** Further, inadvertent or purposeful, turning off reporting of state information **222** may be prevented using aircraft tracker **204** in aircraft tracking system **200.** Reporting rate **224** may be set to provide desired information about aircraft **202** in various situations. This reporting may include obtaining state information **222** for maintenance purposes.

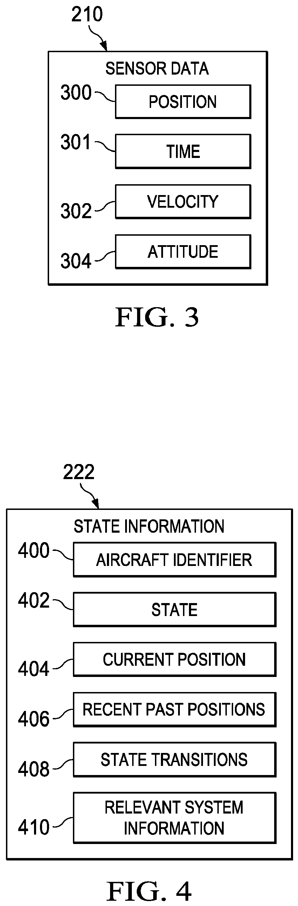

With reference now to **Figure 3****,** an illustration of a block diagram of sensor data is depicted in accordance with an illustrative embodiment. In the illustrative examples, the same reference numeral may be used in more than one figure. This reuse of a reference numeral in different figures represents the same element in the different figures.

In this illustrative example, sensor data **210** is generated by aircraft sensor system **206** located in aircraft tracking system **200** inside housing **209** as shown in **Figure 2****.** In other words, sensor data **210** is generated internally within aircraft tracking system **200.**

Sensor data **210** includes a number of parameters. For example, sensor data **210** includes position **300,** time **301,** velocity **302,** and attitude **304.**

Position **300** includes latitude and longitude of aircraft **202.** Further, position **300** also includes the altitude of aircraft **202.** Position **300** also may include aircraft track information including the direction of travel of aircraft **202.**

Time **301** may be obtained through signals received by satellite navigation system receivers, such as a global positioning system (GPS) receiver and a global navigation satellite system (GLONASS) receiver. Time **301** may be used to identify rates or other information.

Velocity **302** identifies the speed at which aircraft **202** travels. Velocity **302** may include a lateral velocity, a vertical velocity, or both a lateral velocity and a vertical velocity.

As depicted, attitude **304** includes an identification of the pitch and the roll of aircraft **202.** Further, attitude **304** also may include the pitch rate and the roll rate. Attitude **304** also may include an identification of the yaw rate.

In other illustrative examples, sensor data **210** may include other parameters in addition to or in place of the ones depicted in **Figure 3****.** The parameters selected for sensor data **210** may be any parameters that identify the position, trajectory, and attitude of aircraft **202.**

With reference now to **Figure 4****,** an illustration of a block diagram of state information is depicted in accordance with an illustrative embodiment. In this illustrative example, state information **222** is generated by aircraft tracker **204** to report information about aircraft **202** as shown in **Figure 2****.** As depicted, state information **222** includes aircraft identifier **400,** state **402,** current position **404,** recent past positions **406,** state transitions **408,** and relevant system information **410.**

Aircraft identifier **400** identifies aircraft **202** for which state information ²**222** is transmitted. Aircraft identifier **400** may take different forms. For example, aircraft identifier **400** may be a tail number or some other unique identifier.

In the illustrative example, current position **404** is the current position of aircraft **202.** Current position **404** includes latitude, longitude, and altitude.

Recent past positions **406** are positions of aircraft **202.** The positions may be over a period of time or distance. For example, recent past positions **406** may be positions of aircraft **202** for the last 20 minutes.

State transitions **408** are transitions for aircraft **202.** State transitions **408** may identify changes in state **212** of aircraft **202.** State transitions **408** may be, for example, normal 50 minutes; abnormal 8 minutes; and normal 2 hours. State transitions **408** also may indicate that no changes in state **212** occurred.

Relevant system information **410** is information about one or more systems in aircraft **202.** The information included in relevant system information **410** may depend on at least one of state **402** or state transitions **408.** Relevant system information **410** may include at least one of the state of an aircraft system, parameters from an aircraft system, or other suitable information.

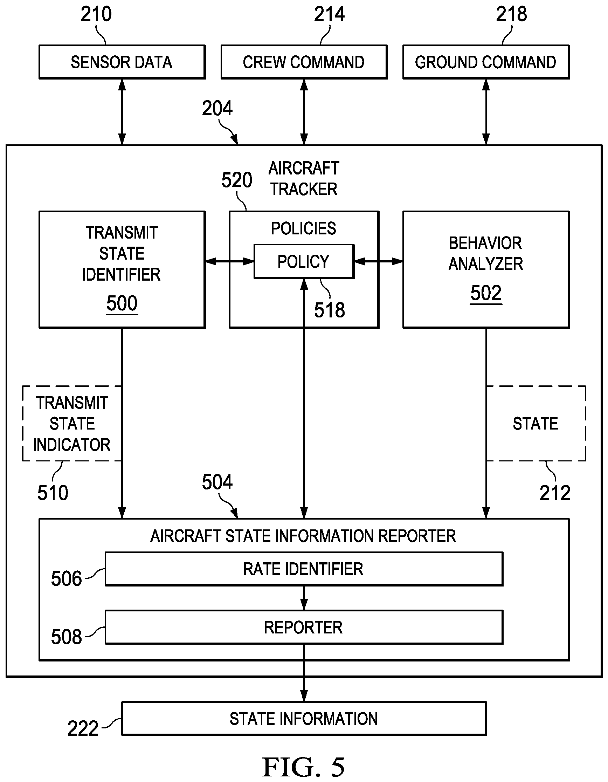

Turning next to **Figure 5****,** an illustration of a block diagram of an aircraft tracker is depicted in accordance with an illustrative embodiment. As depicted, one implementation of aircraft tracker **204** includes transmit state identifier **500,** behavior analyzer **502,** and aircraft state information reporter **504.**

As depicted, one or more of these components in aircraft tracker **204** receives sensor data **210,** crew command **214,** and ground command **218** as inputs. Based on these inputs, the components operate to generate state information **222.**

Transmit state identifier **500** indicates whether state information **222** should be transmitted. Transmit state identifier **500** generates transmit state indicator **510.** In this illustrative example, transmit state indicator **510** is sent to aircraft state information reporter **504.** Transmit state indicator **510** may be, for example, "transmit on" when a transmission should occur and "transmit off" when a transmission should not occur.

In some instances, the transmission of state information **222** may be undesirable. For example, in some locations, the laws of a particular country may prohibit transmitting state information **222** by aircraft **202.**

In this example, transmit state identifier **500** may use sensor data **210** to identify when geographic locations may restrict when state information **222** may be sent as part of the process for generating transmit state indicator **510.** Further, transmitting state information **222** may also be undesirable for detectability reasons when aircraft **202** is in flight. The transmission may be turned off by crew command **214,** ground command **218,** or some combination thereof. Thus, transmit state identifier **500** may generate transmit state indicator **510** based on at least one of crew command **214** or ground command **218.** Priorities between crew command **214** or ground command **218** when both are present is defined using policy **518.**

In the illustrative example, behavior analyzer **502** identifies state **212** of aircraft **202** using sensor data **210** and policy **518.** In this example, policy **518** defines states of aircraft **202** based on sensor data **210.** Policy **518** includes rules that are applied to sensor data **210** to identify state **212** of aircraft **202.** State **212** is sent to aircraft state information reporter **504.**

Aircraft state information reporter **504** transmits state information **222** at reporting rate **224,** shown in **Figure 2****,** set using state **212** of aircraft **202** identified from sensor data **210** and at least one of crew command **214** or ground command **218** when at least one of crew command **214** or ground command **218** is received. In other words, reporting rate **224** is set using a combination of state **212** and crew command **214** and ground command **218** when either or both of those commands have been received for use in setting reporting rate **224.** In this manner, aircraft tracker **204** may operate with autonomy in reporting state information **222** with some influences by the crew through crew command **214** and the ground through ground command **218.**

Aircraft state information reporter **504** also may identify state information **222** for transmission. In the illustrative example, state information **222** is identified from sensor data **210.** As depicted, state information **222** includes at least one of sensor data **210** or information derived from sensor data **210.** For example, state information **222** may include state **212** identified from sensor data **210.**

As depicted, aircraft state information reporter **504** handles setting reporting rate **224** using crew command **214** or ground command **218** using policy **518** along with state **212.** For example, aircraft state information reporter **504** in aircraft tracker **204** transmits state information **222** at reporting rate **224** set using state **212** of aircraft **202** identified from sensor data **210** and at least one of crew command **214** or ground command **218** with state **212** using policy **518.** In this example, policy **518** defines priorities for reporting that are based on at least one of crew command **214,** ground command **218,** or state **212** identified by behavior analyzer **502.**

With policy **518,** aircraft tracker **204** may set reporting rate **224** for state information **222** in autonomously. Increased autonomy is present in which aircraft tracker **204** reports state information **222** and with a desired level of autonomy using policy **518.** For example, the amount of influence that crew command **214** or ground command **218** may have on reporting rate **224** is controlled by policy **518** in aircraft tracker **204.** In other words, aircraft tracker **204** may be configured to reduce tampering that may occur through crew command **214** and ground command **218** using policy **518.**

For example, policy **518** may set priorities for aircraft tracker **204,** crew command **214,** and ground command **218.** In one example, the priorities set in policy **518** from highest to lowest in aircraft tracker **204,** crew command **214,** and ground command **218.** If aircraft tracker **204** identifies a distress state, then crew command **214,** and ground command **218** cannot change reporting rate **224.** In this example, if crew command **214** indicates an "abnormal" state, crew command **214** may be sent again to change the state back to normal. If, however, aircraft tracker **204** changes reporting rate **224** by identifying a distress state, crew command **214** cannot change the rate by sending a command indicating a normal state.

In other examples, policy **518** may set different priorities. The priorities may change depending on what caused the state change. The cause may be identified from at least one of sensor data **210,** crew command **214,** or ground command **218.**

In this illustrative example, aircraft state information reporter **504** includes rate identifier **506** and reporter **508.** Rate identifier **506** identifies reporting rate **224** using state **212** of aircraft **202** identified from sensor data **210** and at least one of crew command **214** or ground command **218** when at least one of crew command **214** or ground command **218** is received. Reporter **508** identifies state information **222** for transmission and transmits state information **222** at reporting rate **224** identified by rate identifier **506** when transmit state identifier **500** indicates that state information **222** should be transmitted. In some illustrative examples, overrides may be included to allow reporting of state information **222** even when transmit state identifier **500** indicates that state information **222** is not to be reported.

As depicted in **Figure 5****,** policy **518** is part of policies **520.** Policy **518** may be a default policy or may be selected from policies **520** based on a selection received from ground command **218.** Policies **520** may be uploaded to aircraft tracking system **200** from ground source **220** or may be already present in aircraft tracking system **200.**

In this manner, aircraft tracker **204** is reconfigurable by changing policy **518** to another policy in policies **520.** For example, policy **518** may be selected based on at least one of the geographic location for a flight, a mission, changes in regulations, or other suitable reasons. The reconfiguration may occur before flight, during maintenance, during flight, or during some other time.

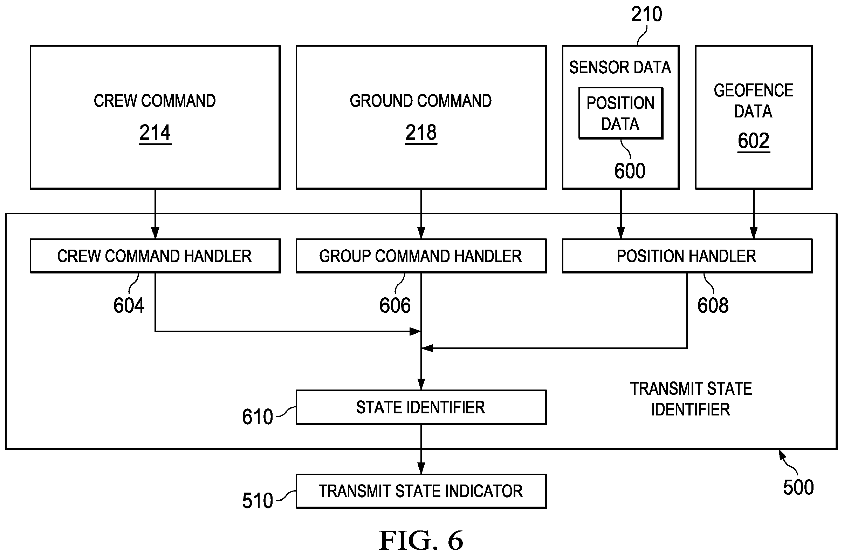

With reference now to **Figure 6****,** an illustration of a block diagram of data flow for a transmit state identifier that identifies the state of an aircraft is depicted in accordance with an illustrative embodiment. In this illustrative example, transmit state identifier **500** receives crew command **214,** ground command **218,** position data **600,** and geofence data **602** as inputs and generates transmit state indicator **510** as an output.

As depicted, transmit state identifier **500** includes a number of different components. In the illustrative example, transmit state identifier **500** includes crew command handler **604,** ground command handler **606,** position handler **608,** and state identifier **610.**

In this illustrative example, crew command **214** may indicate whether aircraft tracker **204** should transmit state information **222.** As depicted, crew command handler **604** monitors for crew command **214** from crew interface **216** as shown in **Figure 2****.** Crew command handler **604** outputs "transmit on" if crew command **214** indicates that transmission should occur. Crew command handler **604** outputs "no-request" if crew command **214** is not received from crew interface **216.**

As depicted, ground command handler **606** outputs "transmit on" in response to receiving ground command **218** that state information **222** should be transmitted. Ground command handler **606** outputs "transmit off" in response to receiving ground command **218** indicating that state information **222** should not be transmitted. In a similar fashion, if ground command **218** is not received, ground command handler **606** outputs "no request."

Position handler **608** uses position data **600** and geofence data **602** to determine whether aircraft tracker **204** should transmit state information **222** based on the location of aircraft **202.** Position handler **608** outputs "transmit off" or "transmit on" to indicate whether state information **222** should be transmitted to position data **600** and geofence data **602.** If either position data **600** or geofence data **602** is absent, position handler **608** outputs "no request."

As depicted, position data **600** is the position of aircraft **202.** Geofence data **602** is obtained from policy **518** in this example and defines positions where aircraft tracker **204** should not transmit state information **222.** Geofence data **602** may define a volume or an area. For example, Geofence data **602** may include coordinates in the form of latitudes, longitudes, and altitudes to define a volume in which transmission of state information **222** should not occur. State identifier **610** generates transmit state indicator **510** based on receiving input from crew command handler **604,** ground command handler **606,** and position handler **608.**

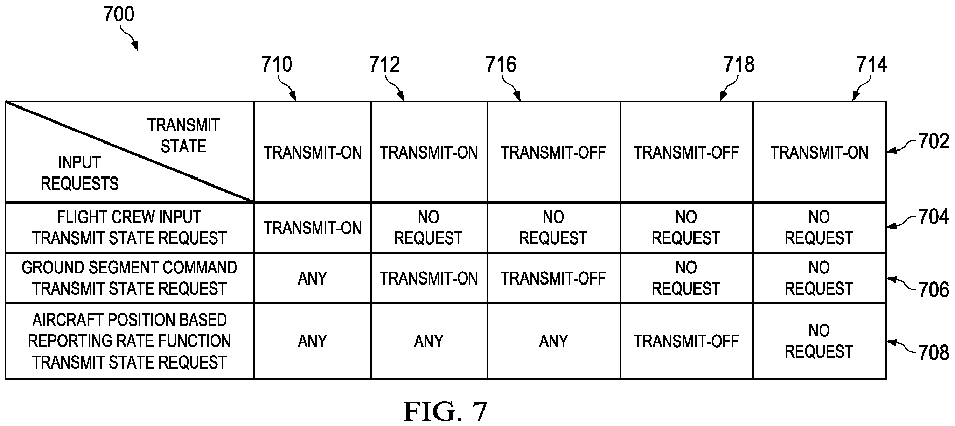

With reference next to **Figure 7****,** an illustration of a table identifying whether state information should be transmitted in which a flight crew command is given the highest priority is depicted in accordance with an illustrative embodiment. In this illustrative example, table **700** may be implemented in policy **518** in **Figure 5****.** Table **700** indicates when state information **222** should be transmitted. The requested states include "transmit on", "transmit off", "any", or "no request". As depicted, "any" may be either "transmit on" or "transmit off."

In this illustrative example, row **702** identifies states for transmit state indicator **510,** row **704** depicts the outputs from crew command handler **604,** row **706** illustrates outputs for ground command handler **606,** and row **708** shows outputs for position handler **608.** As depicted, column **710,** column **712,** and column **714** indicate when transmit state indicator **510** is "transmit on" based on inputs from crew command handler **604,** ground command handler **606,** and position handler **608.** Column **716** and column **718** indicate when transmit state indicator **510** is "transmit off" based on inputs from crew command handler **604,** ground command handler **606,** and position handler **608.**

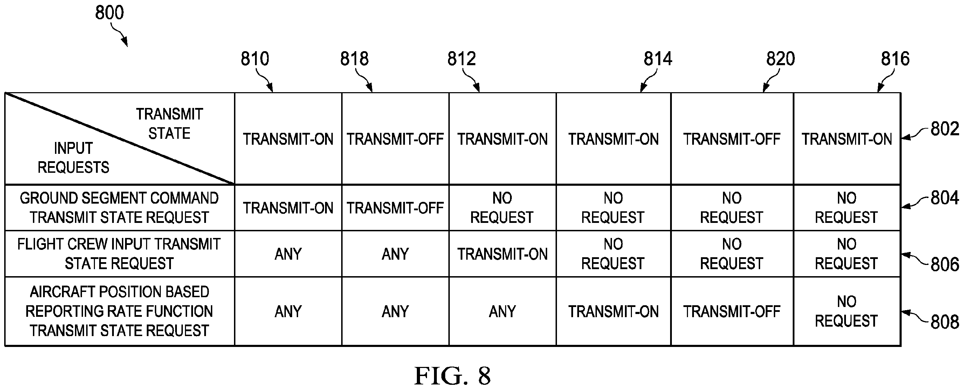

With reference next to **Figure 8****,** an illustration of a table identifying whether state information should be transmitted in which a ground command is given the highest priority is depicted in accordance with an illustrative embodiment. In this illustrative example, table **800** may be implemented in policy **518** in **Figure 5****.** Table **800** indicates when state information **222** should be transmitted. The requested states include "transmit on," "transmit off," "any," or "no request." As depicted, "any" may be either "transmit on" or "transmit off."

In this illustrative example, row **802** identifies states for transmit state indicator **510,** row **804** illustrates outputs for ground command handler **606,** row **806** depicts the outputs from crew command handler **604,** and row **808** shows outputs for position handler **608.** As depicted, column **810,** column **812,** column **814** and column **816** indicate when transmit state indicator **510** is "transmit on" based on inputs from crew command handler **604,** ground command handler **606,** and position handler **608.** Column **818** and column **820** indicate when transmit state indicator **510** is "transmit off" based on inputs from crew command handler **604,** ground command handler **606,** and position handler **608.**

In the depicted examples in table **700** in **Figure 7** and table **800** in **Figure 8****,** the flight crew command is limited to "transmit on" or "no-request" to reflect a tamperproof implementation. For example, crew cannot turn off the transmit capability using the policy implemented with these tables. In another illustrative example, transmit state control policy may the crew to select the "transmit off" state as well as the "transmit on" state.

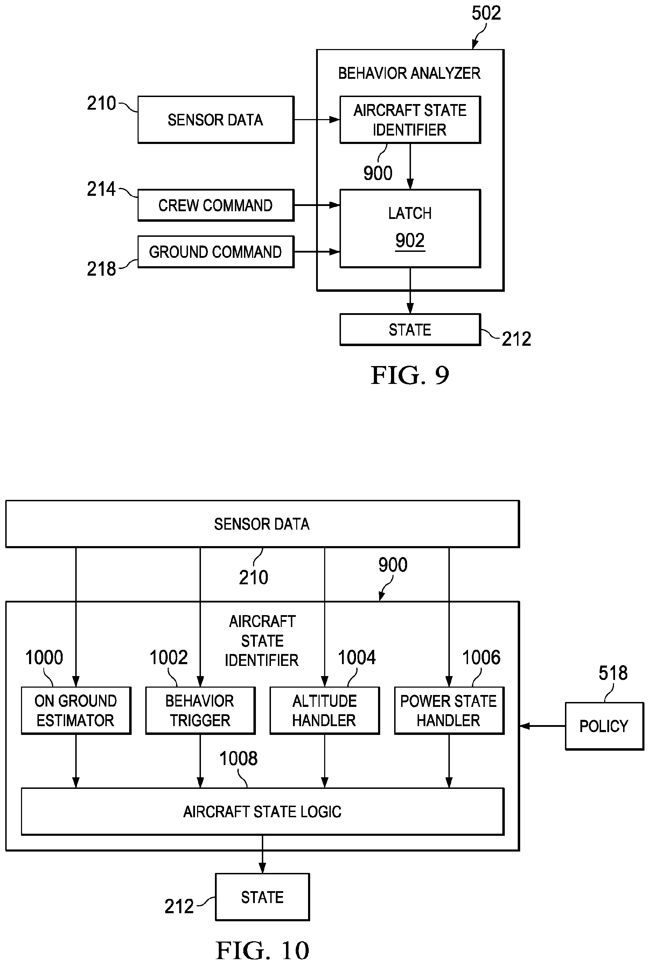

With reference to **Figure 9****,** an illustration of a block diagram of data flow for a behavior analyzer identifying a state of an aircraft is depicted in accordance with an illustrative embodiment. Behavior analyzer **502** receives sensor data **210** as an input and outputs state **212.**

In this illustrative example, behavior analyzer **502** includes a number of components. As depicted, behavior analyzer **502** includes aircraft state identifier **900** and latch **902.**

As depicted, aircraft state identifier **900** identifies state **212** of aircraft **202** using sensor data **210** as inputs. Based on these inputs, aircraft state identifier **900** outputs state **212.** In the illustrative examples, sensor data **210** also may include power information for power received by aircraft tracker **204.**

In the illustrative example, sensor data **210** may be compared to policy **518** shown in **Figure 5** by aircraft state identifier **900** in identifying state **212.** As depicted, state **212** may be selected from a group of states comprising normal, abnormal, and distressed. As depicted, policy **518** may specify parameters in sensor data **210** for aircraft behavior that is considered normal, abnormal, or distressed in identifying state **212.**

These parameters may take the form of thresholds or other values. The parameters may include, for example, roll, roll rate, pitch, pitch rate, cabin pressure, velocity, temperature, and other suitable parameters. Policy **518** includes rules and data that may be used to identify abnormal states and distress states.

In this illustrative example, latch **902** receives state **212** from aircraft state identifier **900** and outputs state **212** to aircraft state information reporter **504** in **Figure 5****.** In the illustrative example, latch **902** maintains the same state **212** even though state **212** as output by aircraft state identifier **900** may change. For example, if state **212** changes from normal to abnormal and then back to normal, latch **902** continues to output abnormal. Latch **902** continues to output the worst state identified for aircraft **202.**

For example, if state **212** identified by aircraft state identifier **900** changes from normal to distress and then to abnormal, latch **902** continues to output distress. In the illustrative example, the hierarchy of states is distress, abnormal, and normal, with distress being the highest and normal being the lowest.

In the illustrative example, at least one of crew command **214** or ground command **218** may be used to reset latch **902.** When latch **902** is reset, latch **902** outputs the state received from aircraft state identifier **900** at the time of the reset. The priorities in resetting latch **902** between crew command **214** and ground command **218** may be specified by policy **518.** In another example, latch **902** also may reset after a selected period of time passes. In another illustrative example, crew command **214** may not be used to reset latch **902.** This option may be selected depending on issues with tampering. By not using crew command **214,** possibility of tampering may be reduced. However, when crew command **214** is used, the policy may be implemented to limit the ability to reset latch **902.**

With reference next to **Figure 10****,** an illustration of a block diagram of an aircraft state identifier is depicted in accordance with an illustrative embodiment. As depicted, aircraft state identifier **900** includes on ground estimator **1000,** behavior trigger **1002,** altitude handler **1004,** power state handler **1006,** and aircraft state logic **1008.**

As depicted, on ground estimator **1000** determines whether aircraft **202** is on the ground. In the illustrative example, if aircraft **202** is on the ground, reporting of state information **222** by aircraft tracker **204** is unnecessary in the depicted example.

On ground estimator **1000** outputs "on ground" when a determination is made that aircraft **202** is on the ground using sensor data **210.** Sensor data **210** used by on ground estimator **1000** includes, for example, altitude, ground speed, vertical speed, and other parameters that may be derived using aircraft sensor system **206.** Additionally, if access to the avionics in aircraft **202** is present, on ground estimator **1000** may also use parameters, such as, for example, a configuration of landing gear, airspeed, altitude, cabin pressurization, and other suitable information that may be obtained from at least one of aircraft sensor system **206** and avionics in aircraft **202.**

Behavior trigger **1002** outputs "normal," "abnormal," or "distress" using sensor data **210.** Behavior trigger **1002** employs rules in policy **518.** These rules include, for example, trigger conditions that may indicate a state of "abnormal" or "distress."

For example, abnormal states may be present when selected trigger conditions for abnormal states are met. For example, trigger conditions may be a roll that is greater than a threshold value. In another example, trigger conditions may be a pitching aircraft that is greater than a threshold value at a particular altitude. These and other trigger conditions are used to identify state **212** of aircraft **202.**

Altitude handler **1004** indicates a state of aircraft **202** based on the altitude of aircraft **202.** For example, altitude handler **1004** may indicate a "normal" state if the aircraft is within a desired altitude. If the aircraft is lower or higher than the desired altitude, then altitude handler **1004** may indicate an "abnormal" or "distress" state.

In the illustrative example, altitude handler **1004** may set the minimum and maximum altitudes for indicating an "abnormal" or "distress" state by the means of geographic boundaries. These geographic boundaries form geofences. For example, the geographic boundaries may provide different minimum and maximum altitude thresholds for oceanic or enroute flight phases and for flight phases taking place closer to the departure and destination locations.

In the illustrative example, power state handler **1006** receives power information in sensor data **210.** Power state handler **1006** outputs "normal," "abnormal," or "distress" with respect to the power received by aircraft tracker **204.**

For example, the power state is indicated as "distress" if power information indicates the transition from power on to power off while on ground estimator **1000** indicates that aircraft **202** is airborne. As another example, power state handler **1006** indicates that the power state is "abnormal" if power is received from a secondary power source while aircraft **202** is indicated as being airborne by on ground estimator **1000.**

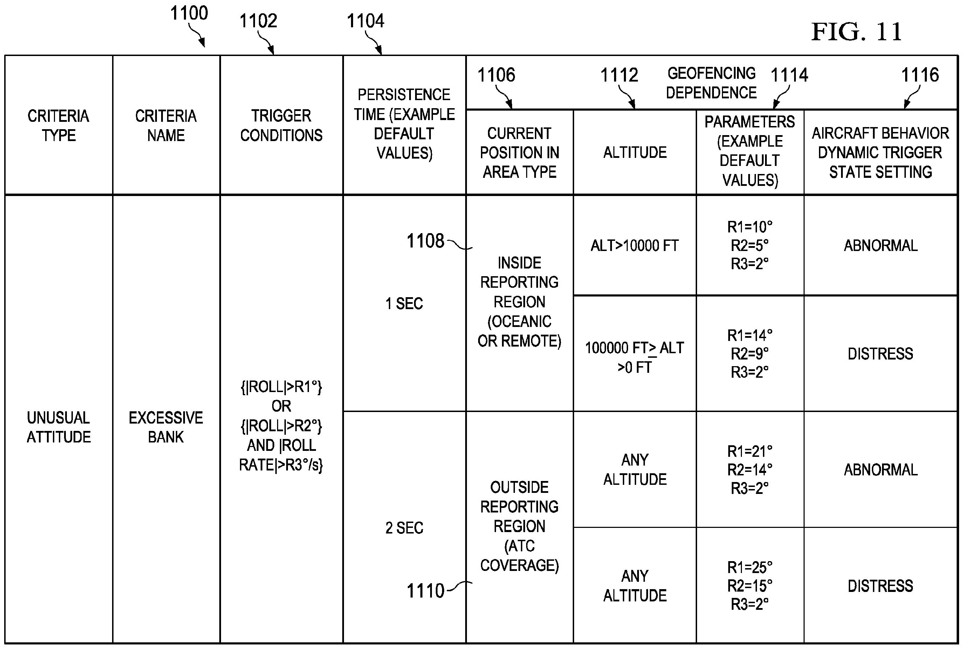

With reference next to **Figures 11-15****,** an illustration of tables for trigger conditions and identifying states in a policy is depicted in accordance with an illustrative embodiment. As depicted in **Figure 11****,** an illustration of a table of trigger conditions for excessive banking is depicted in accordance with an illustrative embodiment. Table **1100** may be used by behavior trigger **1002** in **Figure 10** and illustrates trigger conditions roll in column **1102.** Column **1104** indicates persistence time. In other words, if the trigger conditions are present for more than the time indicated in column **1104,** then the condition is triggered. The default value for the time is an example default value.

Column **1106** indicates types of positions for geo-fencing. For example, inside reporting region **1108** itself may be an oceanic or remote region. Outside reporting region **1110** may be a region such as one in which air traffic control tracking radar coverage is present.

Column **1112** indicates altitudes for parameters values in column **1114.** The parameter values in column **1114** are for parameters in the trigger conditions in column **1102.** Column **1116** identifies the state. These values are example default values.

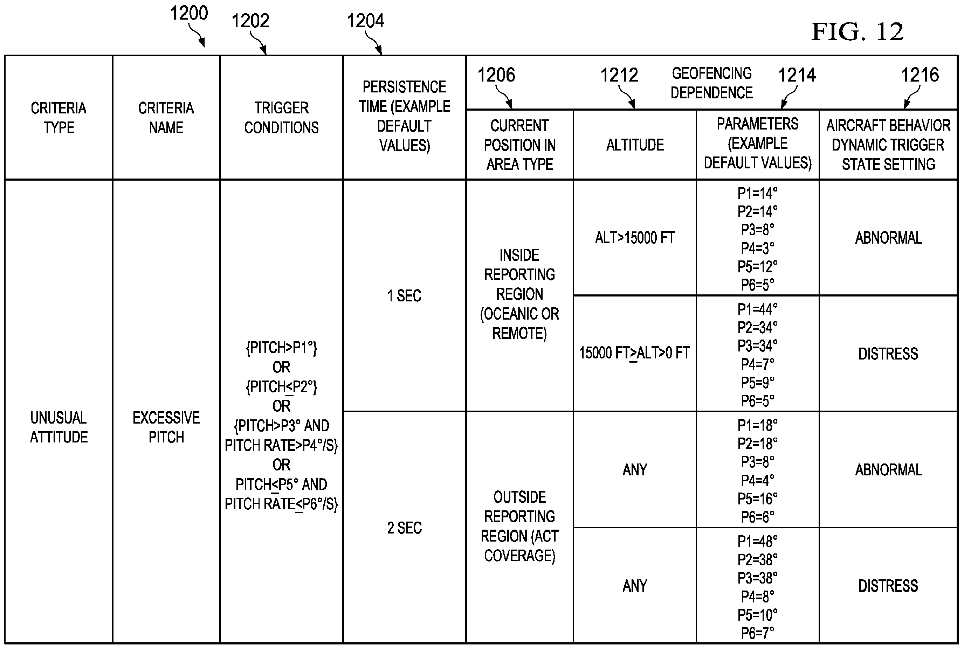

With reference to **Figure 12****,** an illustration of a table of trigger conditions for excessive pitch is depicted in accordance with an illustrative embodiment. Table **1200** may be used by behavior trigger **1002** in **Figure 10** and illustrates trigger conditions for pitch by aircraft **202** in column **1202.** Column **1204** indicates persistence time. Column **1206** indicates types of positions for geo-fencing. Column **1212** indicates altitudes for parameters values in column **1214.** The parameter values are for parameters in the trigger conditions in column **1202.** Column **1216** identifies the state.

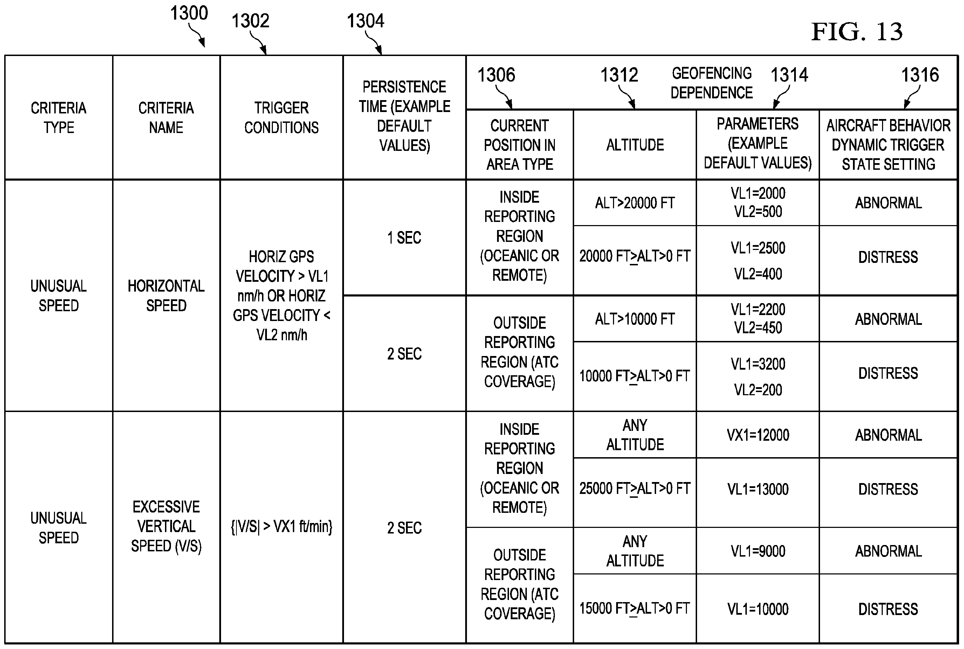

Turning next to **Figure 13****,** an illustration of a table of trigger conditions for excessive speed is depicted in accordance with an illustrative embodiment. Table **1300** may be used by behavior trigger **1002** in **Figure 10** and illustrates trigger conditions for horizontal speed and vertical speed by aircraft **202** in column **1302.** Column **1304** indicates persistence time. Column **1306** indicates types of positions for geo-fencing. Column **1312** indicates altitudes for parameters values for horizontal and vertical speed in column **1314.** The parameter values are for parameters in the trigger conditions in column **1302.** Column **1316** identifies the state.

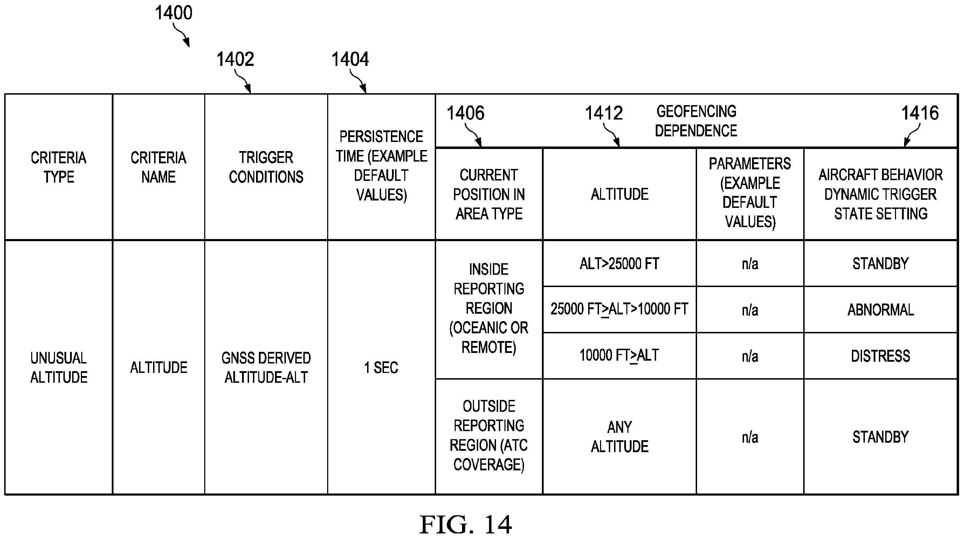

In **Figure 14****,** an illustration of a table of states for altitudes is depicted in accordance with an illustrative embodiment. Table **1400** may be used by altitude handler **1004** in **Figure 10** and illustrates altitudes and states. Column **1404** indicates persistence time. Column **1406** indicates types of positions for geo-fencing. Column **1412** indicates altitudes, and column **1416** identifies the state based on the altitudes in column **1412.**

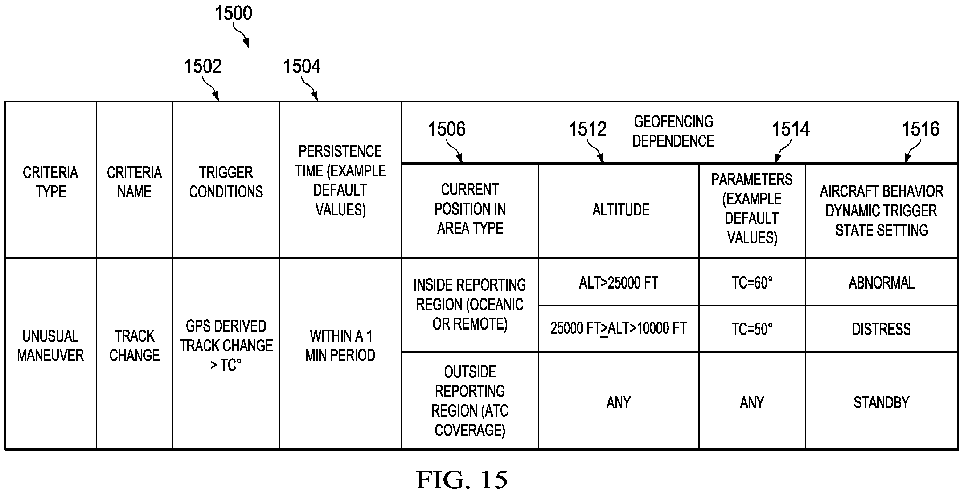

With reference next to **Figure 15****,** an illustration of a table of trigger conditions for track changes is depicted in accordance with an illustrative embodiment. Table **1500** may be used by behavior trigger **1002** in **Figure 10** and illustrates trigger conditions for change in the track for aircraft **202** in column **1502.** Column **1504** indicates persistence time. Column **1506** indicates types of positions for geo-fencing. Column **1512** indicates altitudes for parameters values for track changes in column **1514.** The parameter values in column **1514** are for parameters in the trigger conditions in column **1502.** Column **1516** identifies the state.

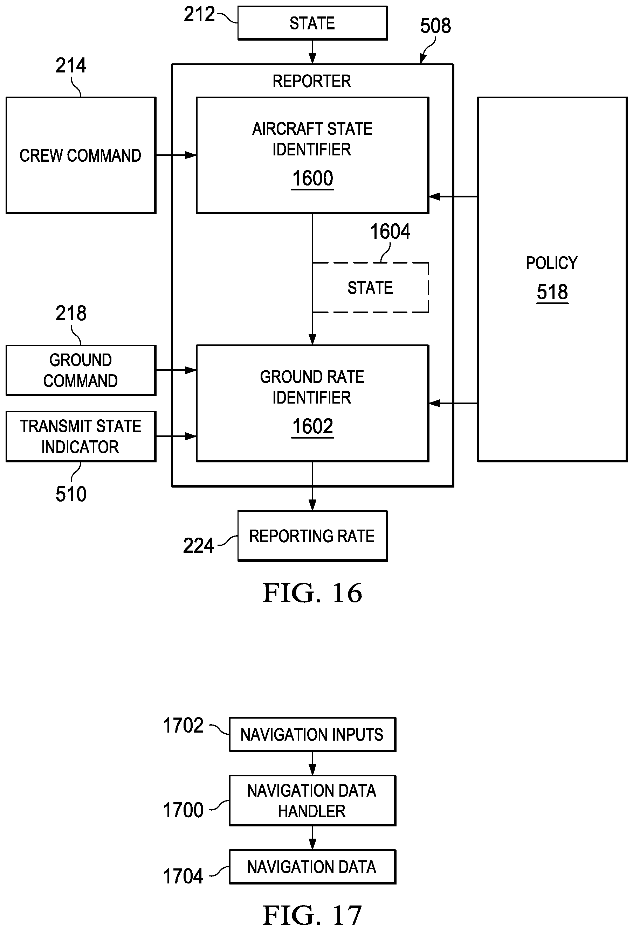

Turning next to **Figure 16****,** an illustration of a block diagram of a rate identifier is depicted in accordance with an illustrative embodiment. In this illustrative example, an implementation for rate identifier **506** in **Figure 5** is shown. As depicted, rate identifier **506** includes aircraft rate identifier **1600** and ground rate identifier **1602.**

As depicted, aircraft rate identifier **1600** selects state **1604** from state **212** in **Figure 2** identified by behavior analyzer **502** and the state identified from crew command **214.** In other words, a state is identified from states that may be output by at least one of behavior analyzer **502** and crew command **214.**

Additional functions may be implemented in aircraft state identifier **1600** to determine state **1604.** In one illustrative example, geographically based reporting rate settings may be used. The settings may define aircraft position and transmit rate settings associated with pre-defined geographic areas or volumes in the form of geofences. The geographic areas may be defined using latitude and longitude. The volumes may include latitude, longitude, and altitude.

These aircraft position based rate inputs can be used to set non-distress reporting states and abnormal reporting states to lower or higher values, depending on the availability of alternative aircraft tracking data sources. The lower and higher values for reporting rates may include report-off, a standby state, or a normal state. Availability of aircraft tracking data sources may take into account air traffic control surveillance radar coverage.

These types of settings may be used to reduce communications resource usage and hence, system operating costs. In this illustrative example, state **1604** output by aircraft rate identifier **1600** may be determined by the combination of the settings of the aircraft state identifier **900,** the crew command **214** and this aircraft position based reporting function using prioritizations set by policy **518.**

In the illustrative example, a priority between differing states may be defined by policy **518** in **Figure 5****.** Policy **518** indicates a state is output as state **1604** by aircraft rate identifier **1600** when state **212** output by behavior analyzer **502,** the state in crew command **214,** and other aircraft rate identifier functions are not the same. Policy **518** may be set to prioritize between these inputs with the inputs being treated as equal in priority, such that the highest requested state sets the aircraft state. Alternatively, policy **518** may be set to prioritize one set of inputs over the others.

For example, a priority may be, from highest to lowest, as follows: "distress," "report off," "abnormal," "normal," "standby," and "no request." If behavior analyzer **502** outputs state **212** as "normal" and crew command **214** indicates "abnormal," then "abnormal" by crew command **214** is output in state **1604** by aircraft rate identifier **1600.** The output is sent to ground rate identifier **1602.**

Ground rate identifier **1602** identifies reporting rate **224** based on state **1604** output by at least one of aircraft rate identifier **1600** or the state in crew command **214.** Priorities of states between state **1604** and the state in ground command **218** may be identified in a similar fashion as described, with respect to aircraft rate identifier **1600** when state **1604** and the state in ground command **218** are not same. The state is used to identify reporting rate **224** in the illustrative example.

In the illustrative example, ground rate identifier **1602** also uses transmit state indicator **510** to determine whether any transmissions of state information **222** should occur. If transmit state indicator **510** is "transmit on," then ground rate identifier **1602** causes reporter **508** in **Figure 5** to transmit state information at a rate in reporting rate **224.** If transmit state indicator **510** is "transmit off," then ground rate identifier **1602** causes reporter **508** to not transmit state information **222** by setting reporting rate **224** to zero.

In one illustrative example, ground rate identifier **1602** and policy **518** may determine reporting rate **224** using rules in policy **518** that are configured to treat all the rate inputs, including aircraft rate identifier **1600,** state **1604** input, and ground command **218,** as equal priority. With this example, the highest reporting state is selected to be output as reporting rate **224.**

Another illustrative example, ground rate identifier **1602** and policy **518** may determine reporting rate **224** using rules in policy **518** that are configured to treat one source as the high-priority input and use this input, unless the input is "no-request" for reporting rate **224.** The source may be, for example, ground command **218.** In the situation in which the high priority input has an input of "no-request," the other inputs are treated as equal in priority, such that the highest requested rate sets reporting rate **224.**

In yet another illustrative example, ground rate identifier **1602** and policy **518** may determine reporting rate **224** using rules in policy **518**that are configured to treat one source as the high priority input for non-distress states or non-distress and non-abnormal states. This input is used unless the input is "no-request" for reporting rate **224** when inputs of abnormal state or distress state are absent. In the depicted example, the high-priority input may be, for example, ground command **218.**

When high priority input has an input of "no-request", then in non-distress and non-abnormal cases, the other inputs are treated as equal in priority such that the highest requested rate sets reporting rate **224.** When an "abnormal" or "distress" is present in one or more of the inputs, the highest requested rate by the inputs is used to set reporting rate **224** or the value of the prioritized input (if an input other than "no-request) is present, may be used to set reporting rate **224.**

In still yet another illustrative example, policy **518** may include rules and the parameters that define at least one of thresholds, persistence and hysteresis times, geofences for transmit state, and rate settings. For example, policy **518** also may include geographic definitions for minimum and maximum safe altitudes in transmit state identifier **500,** aircraft state identifier **900,** and aircraft rate identifier **1600.**

Policy **518** also may include rules that are used to set the reporting rates output by ground rate identifier **1602** and by reporter **508.** As depicted, policy **518** may define default settings that are built into the system.

These settings may be updated by the loading of new data using configuration table inputs, such as the tables shown in **Figures 7-8** and **Figures 11-14****.** The new data may supersede the default values for long term operations or by ground commands that provide real-time updates that may be valid over a shorter period.

With reference now to **Figure 17****,** an illustration of a block diagram of a navigation data handler is depicted in accordance with an illustrative embodiment. In this illustrative example, navigation data handler **1700** receives navigation inputs **1702** from aircraft sensor system **206** and avionics in aircraft **202.** Navigation inputs **1702** are a portion of sensor data **210** in **Figure 2****.**

For example, aircraft sensor system **206** may include one or more satellite navigation system receivers, such as a global positioning system (GPS) receiver and a global navigation satellite system (GLONASS) receiver. Inputs are received from the avionics in aircraft **202** such as an aircraft inertial navigation system.

Navigation data handler **1700** processes navigation inputs **1702** and outputs navigation data **1704.** In processing the sensor data, navigation data handler **1700** may identify which inputs include navigation data **1704.** For example, navigation data handler **1700** may determine which inputs in navigation inputs **1702** have valid data. As depicted, navigation data **1704** includes, for example, position, attitude, velocity, timing information, validity information, and other suitable information.

The illustration of aircraft tracking system **200** and the different components in **Figures 1-17** are not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, sensor data **210** may also include data generated by a sensor system external to aircraft sensor system **206** that is external to aircraft tracking system **200.** For example, sensor data **210** may include data generated by the avionics in aircraft **202.** The sensor data may be received through a connection of aircraft tracking system **200** to a data bus meeting the standard ARINC 429 for digital information transfer.

In another illustrative example, ground estimator **1000,** behavior trigger **1002,** altitude handler **1004,** power state handler **1006,** and aircraft state logic **1008** in **Figure 10** may be combined into a single component that applies policy **518.** In other illustrative examples, transmit state identifier **500** in **Figure 5** may be omitted.

In still another illustrative example, crew command handler **604** and the ground command handler **606** may be implemented in other components to process crew command **214** and ground command **218** for use by the components. For example, crew command handler **604** and ground command handler **606** may be implemented in behavior analyzer **502** in **Figure 9****.**

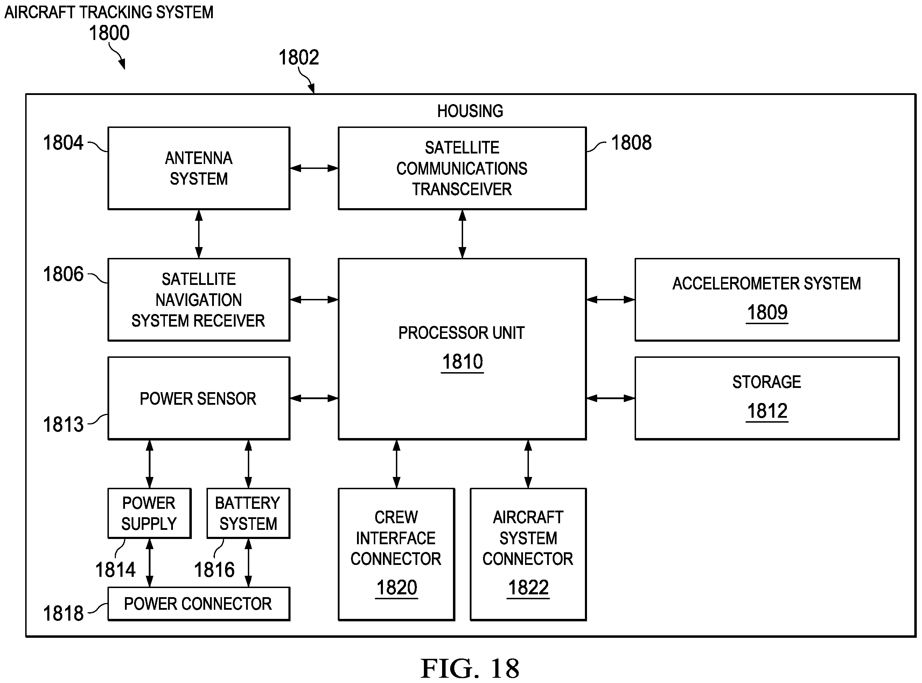

Turning now to **Figure 18****,** an illustration of a block diagram of an aircraft tracking system is depicted in accordance with an illustrative embodiment. As depicted, hardware components in aircraft tracking system **1800** are shown. Aircraft tracking system **1800** shows hardware components that may be used to implement tracker device **104** in **Figure 1** and aircraft tracking system **200** in **Figure 2****.** In this example, aircraft tracking system **1800** includes housing **1802.**

In this illustrative example, aircraft tracking system **1800** is tamper-resistant. Housing **1802** is designed to make aircraft tracking system **1800** tamper-resistant in this example. Aircraft tracking system **1800** is considered tamper-resistant when the possibility of accessing or interfering with the operation of aircraft tracking system **1800** from inside an aircraft is reduced as much as desired or eliminated. For example, aircraft tracking system **1800** may be attached to the exterior of aircraft **202,** and housing **1802** may be designed to limit the ability of undesired access to components inside of housing **1802.**

Other types of installation designs may be used to reduce tampering with aircraft tracking system **1800.** For example, the routing of wires may be made through areas in which access is more difficult from within the aircraft. As depicted, hardware components inside aircraft tracking system **1800** include antenna system **1804,** satellite navigation system receiver **1806,** satellite communications transceiver **1808,** an accelerometer system **1809,** processor unit **1810,** storage **1812,** power sensor **1813,** power supply **1814,** and battery system **1816.**

Satellite navigation system receiver **1806** receives navigation signals from satellites in a satellite navigation system through antenna system **1804.** For example, without limitation, satellite navigation system receiver **1806** may receive navigation signals from satellites in a global navigation satellite system selected from at least one of the Global Positioning System (GPS), the Global Navigation Satellite System (GLONASS), or some other suitable global navigation satellite system.

Satellite navigation system receiver **1806** generates sensor data, such as sensor data **210** in **Figure 2** in this example. For example, satellite navigation system receiver **1806** identifies the position of an aircraft.

As depicted, satellite communications transceiver **1808** sends and receives information for ground segment communications through a satellite in a satellite communications system. For example, satellite communications transceiver **1808** receives ground command **218** in **Figure 2** and sends state information **222** in **Figure 2****.** The satellite communications system may be, for example, an Iridium satellite constellation, Globalstar, or some other suitable satellite communications system.

In this illustrative example, processor unit **1810** is an example of one type of hardware in which aircraft tracker **204** in **Figure 2** may be implemented. As depicted, processor unit **1810** may be one or more processors selected from at least one of a central processing unit, a multi-processor core, a digital signal processor, or some other type of processor, depending on the particular implementation.

In this illustrative example, accelerometer system **1809** generates sensor data describing the attitude of an aircraft. The attitude may include at least one of role, pitch, or yaw, as well as rates for these types of attitudes.

Storage **1812** stores information and program code for use by processor unit **1810.** Storage **1812** is one or more storage devices, and a storage device is any piece of hardware that is capable of storing information, such as, for example, without limitation, at least one of data, program code in functional form, or other suitable information either on a temporary basis, a permanent basis, or both on a temporary basis and a permanent basis. Storage **1812** may include at least one of memory and persistent storage. Memory in these examples may be, for example, a random access memory or any other suitable volatile or non-volatile storage device. Persistent storage may contain one or more components or devices. For example, persistent storage can be a hard drive, a solid state hard drive, a flash memory, a rewritable optical disk, a rewritable magnetic tape, or some combination of the above.

In the illustrative example, power supply **1814** is any electrical system that provides power in a form useable by other components in aircraft tracking system **1800** when power supply **1814** is connected to a primary or secondary power source in an aircraft. Battery system **1816** is one more batteries and may include circuits for charging the batteries and to deliver current to the other components in aircraft tracking system **1800.** Battery system **1816** provides back-up power for aircraft tracking system **1800.**

As depicted, battery system **1816** aids in making aircraft tracking system **1800** tamper-resistant. For example, if the connection to the power source is cut or the power source is disabled, aircraft tracking system **1800** may still operate for some period of time.

Power sensor **1813** detects power supplied by power supply **1814** and battery system **1816.** Power sensor **1813** provides data about the power detected to processor unit **1810.** This data is an example of sensor data.

In this illustrative example, aircraft tracking system **1800** has a number of different connections. As depicted, aircraft tracking system **1800** includes power connector **1818,** crew interface connector **1820,** and aircraft system connector **1822.**

Power connector **1818** provides a connection from power supply **1814** inside housing **1802** to one or more power sources in the aircraft. For example, power connector **1818** may be connected to the primary power supply, a battery backup system, an auxiliary power unit, or some other power source in an aircraft.

Crew interface connector **1820** provides processor unit **1810** a connection to a crew interface in the aircraft. In the illustrative examples, the crew interface may be, for example, a switch and a display on the flight deck of an aircraft.

In this illustrative example, aircraft system connector **1822** provides a connection between processor unit **1810** and the avionics in an aircraft. This connection may be through a data bus meeting the standard ARINC 429, or any other suitable type of bus, network, or communications medium for transmitting information.

The illustration of aircraft tracking system **1800** is only meant as an example of hard components that may be used to implement aircraft tracking system **1800,** and not meant to limit the manner in which other illustrative examples may be implemented. For example, in other illustrative examples, other components in addition to satellite navigation system receiver **1806** may be used to provide sensor data. For example, an accelerometer system, an inertial measurement unit, or other devices may be used.

In yet another example, a capacitor system may be used in addition to or in place of battery system **1816** for providing power when the power source fails to provide power to aircraft tracking system **1800.** In another illustrative example, aircraft system connector **1822** may be omitted from aircraft tracking system **1800.**

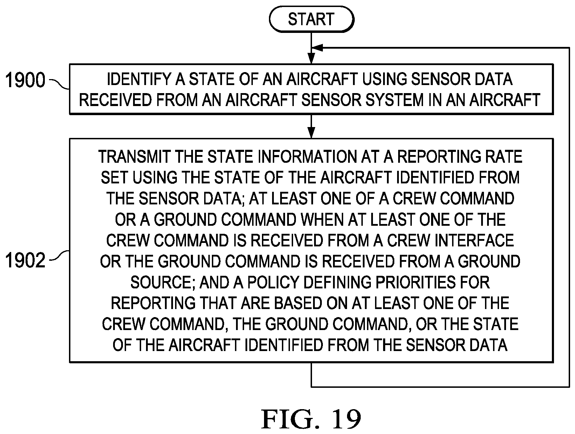

Turning next to **Figure 19****,** an illustration of a flowchart of a process for reporting state information is depicted in accordance with an illustrative embodiment. The process illustrated in **Figure 19** is implemented in aircraft tracking system **200** in **Figure 2****.** In particular, the process may be implemented in aircraft tracker **204** in aircraft tracking system **200** in **Figure 2****.**

The process begins by identifying a state of an aircraft using sensor data received from an aircraft sensor system in an aircraft (operation **1900**). The process transmits the state information at a reporting rate set using the state of the aircraft identified from the sensor data; at least one of a crew command or a ground command when at least one of the crew command is received from a crew interface or the ground command is received from a ground source; and a policy defining priorities for reporting that are based on at least one of the crew command, the ground command, or the state of the aircraft identified from the sensor data (operation **1902**) with the process returning to operation **1900.**

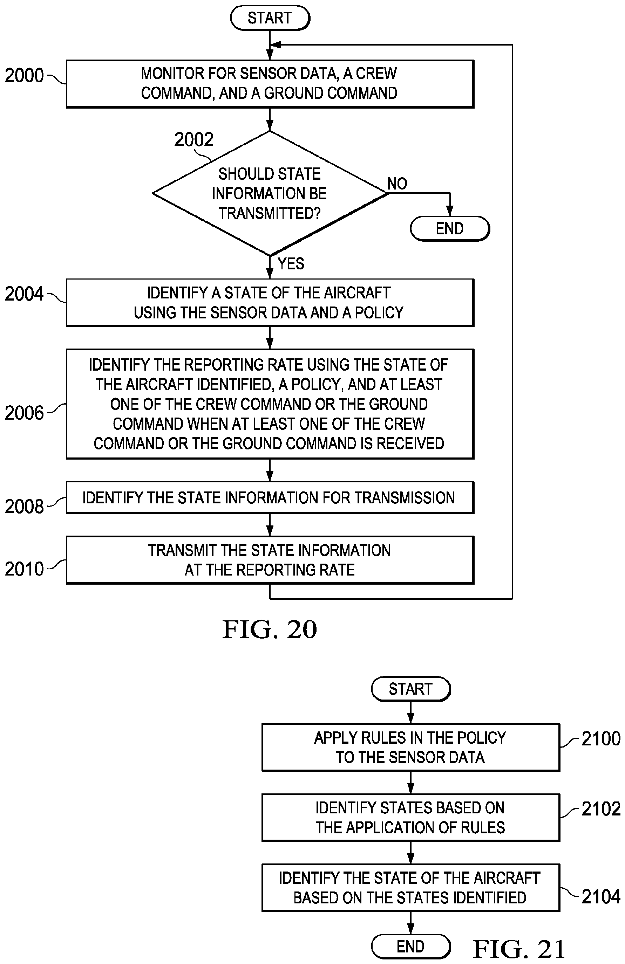

With reference next to **Figure 20****,** an illustration of a flowchart of a process for reporting state information is depicted in accordance with an illustrative embodiment. The process illustrated in **Figure 20** may be implemented in aircraft tracker **204** in **Figure 2****.**

The process begins by monitoring for sensor data, a crew command, and a ground command (operation **2000**). In operation **2000,** sensor data is received from the aircraft sensor system in the aircraft tracking system. Additionally, sensor data may be also received from a sensor system in the aircraft. The crew command is received from a crew command interface, and the ground command is received from the ground source over a satellite communications system.

The process determines whether state information should be transmitted (operation **2002**). If state information should not be transmitted, the process terminates. Operation **2002** is performed by transmit state identifier **500** in **Figure 5****.**

Otherwise, the process identifies a state of the aircraft using the sensor data and a policy (operation **2004**). The policy includes one or more rules that are applied to the sensor data to identify the current state of the aircraft. Operation **2004** is performed by behavior analyzer **502** in **Figure 5****.**

The process identifies the reporting rate using the state of the aircraft identified, a policy, and at least one of the crew command or the ground command when at least one of the crew command or the ground command is received (operation **2006**). Operation **2006** is performed by aircraft state information reporter **504** in **Figure 5****.**

The policy in operation **2006** includes rules that define reporting rates based on the state of the aircraft. The policy also may include data used to apply the rules. The policy also includes rules that define reporting rates when a crew command, a ground command, or both are received. In this manner, the policy defines a priority in setting the reporting rate based on input from a crew member, a ground source, and the state identified for the aircraft. For example, if the aircraft tracker has the highest priority, a rate in the input from the crew member or the ground would not change the reporting rate as set by the aircraft tracker. In the illustrative example, the priority may be selected in a manner that reduces tampering and increases autonomy in setting the reporting rate.

The process identifies the state information for transmission (operation **2008**). Operation **2008** is performed by aircraft state information reporter **504** in **Figure 5****.** The process transmits the state information at the reporting rate (operation **2010**) with process returning to operation **2000** as described above. Operation **2010** also is performed by aircraft state information reporter **504** in **Figure 5****.**

With reference next to **Figure 21****,** an illustration of a flowchart of a process for identifying the state of an aircraft is depicted in accordance with an illustrative embodiment. The process illustrated in **Figure 21** is an example of one implementation for operation **2004** in **Figure 20****.**

The process begins by applying rules in the policy to the sensor data (operation **2100**). The process identifies states based on the application of rules (operation **2102**). For example, a rule with respect to altitude may indicate that the state of the aircraft is "normal" with respect to altitude. Another rule for pitch of the aircraft may indicate that the aircraft is "abnormal" when that rule is applied to the sensor data. A third rule, with respect to power, may indicate a distress situation is present when the rule is applied to the power information in the sensor data.

The process then identifies the state of the aircraft based on the states identified (operation **2104**) with the process terminating thereafter. In operation **2104,** all of the rules may result in the same state being identified. In some cases, some rules may indicate a "normal" state while another rule indicates an "abnormal" state. In yet another example, one rule may indicate a "normal" state, a second rule may indicate a "distress" state, while a third rule indicates an "abnormal" state.

These different states are resolved in operation of **2104** using a policy defining the priority of states. For example, the priority may be "distress," "abnormal," and "normal," with "distress" having the highest priority and "normal" having the lowest priority.

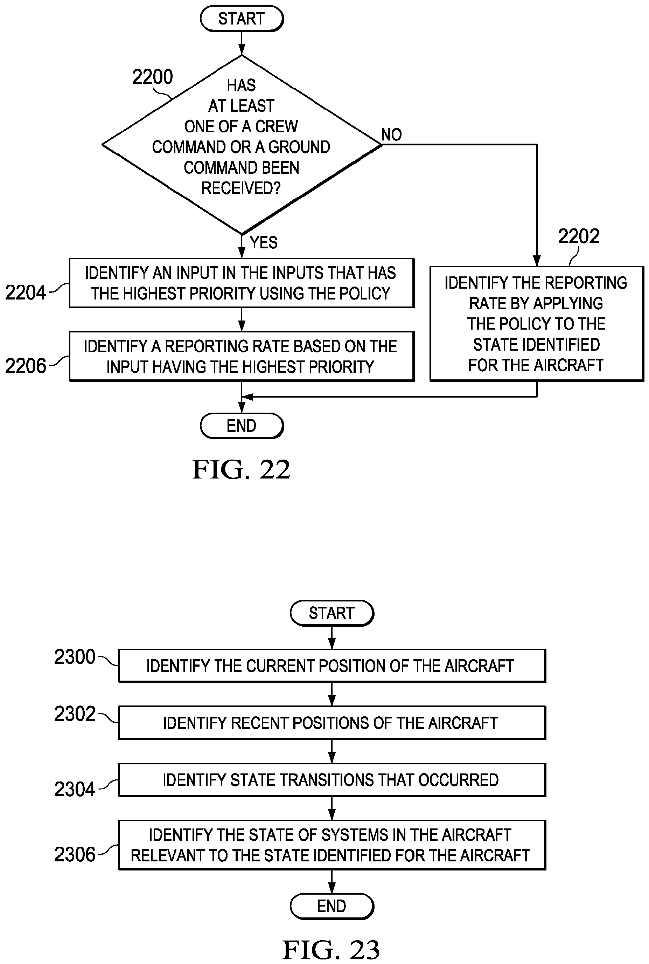

Turning next to **Figure 22****,** an illustration of a flowchart of a process for identifying a reporting rate is depicted in accordance with an illustrative embodiment. The process illustrated in **Figure 22** is an example of one implementation for operation **2004** in **Figure 20****.**

The process begins by determining whether at least one of a crew command or a ground command has been received (operation **2200**). If neither a crew command nor a ground command has been received, the process identifies the reporting rate by applying the policy to the state identified for the aircraft (operation **2202**) with the process terminating thereafter. In applying the policy to the state, the location of the aircraft also may be taken into account depending on the implementation.

If at least one of a crew command or a ground command has been received, at least one of the crew command or the ground command and the state of the aircraft are inputs. With reference again to operation **2200,** if at least one of a crew command or ground command has been received, the process identifies an input in the inputs that has the highest priority using the policy (operation **2204**). For example, the policy may give the highest priority to the input that identifies a "distress" state. In another example, if the crew command indicates an "abnormal" state while stating the aircraft has been identified as "normal," the crew input has the highest priority.

The process then identifies a reporting rate based on the input having the highest priority (operation **2206**). The process terminates thereafter.

Turning now to **Figure 23****,** an illustration of a flowchart of a process for identifying state information is depicted in accordance with an illustrative embodiment. The process illustrated in **Figure 23** is an example of an implementation for operation **2006** in **Figure 20****.**

The process begins by identifying the current position of the aircraft (operation **2300**). The process identifies recent positions of the aircraft (operation **2302**).

The process identifies state transitions that occurred (operation **2304**). The state transitions included are based on some number of transitions or transitions occurring within some period of time. For example, in operation **2304,** a "normal" state, an "abnormal" state, and a normal state may be included in state transitions because these states occurred within a one hour period of time. Further, the duration of each state may be included in the state transitions.

The process identifies the state of systems in the aircraft relevant to the state identified for the aircraft (operation **2306**) with the process terminating thereafter. In operation **2306** the state of the aircraft may have been identified as "abnormal." Systems associated with the parameters identified as "abnormal" are included as systems identified in operation **2304.** The state of the systems may be identified for inclusion in the state information.

In the event that the state is "normal," then no systems may be included in the state information. Alternatively, the state for a default set of systems may be used. As used herein, "a set of," when used with respect to items, means one or more items. For example, a set of systems is one or more systems.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step. For example, one or more of the blocks may be implemented as program code, in hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

For example, in operation **2006,** the identification of the state information for transmission may be performed using a policy having rules that identify what information should be included in the state information. The policy may select state information based on the state of the aircraft.

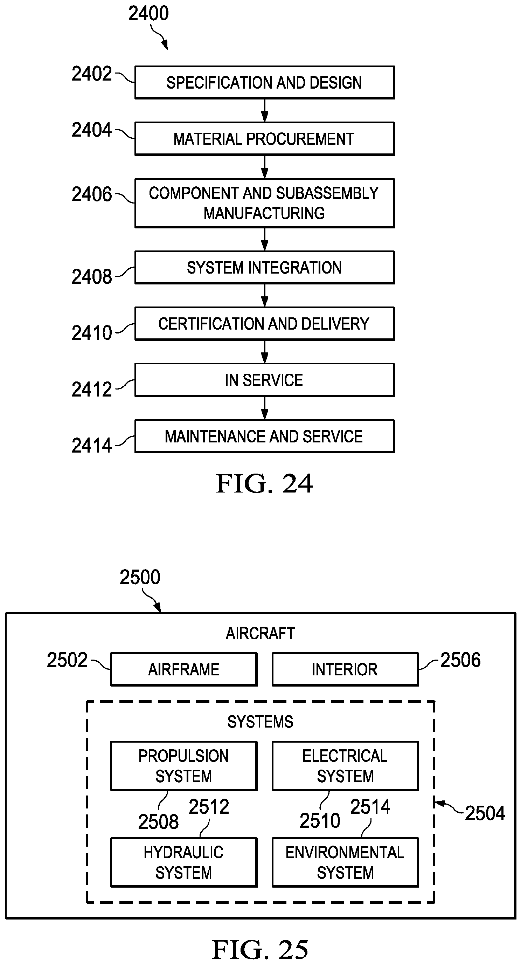

Illustrative embodiments of the disclosure may be described in the context of aircraft manufacturing and service method **2400** as shown in **Figure 24** and aircraft **2500** as shown in **Figure 25****.** Turning first to **Figure 24****,** an illustration of a block diagram of an aircraft manufacturing and service method is depicted in accordance with an illustrative embodiment. During pre-production, aircraft manufacturing and service method **2400** may include specification and design **2402** of aircraft **2500** in **Figure 25** and material procurement **2404.**

During production, component and subassembly manufacturing **2406** and system integration **2408** of aircraft **2500** in **Figure 25** takes place. Thereafter, aircraft **2500** may go through certification and delivery **2410** in order to be placed in service **2412.** While in service **2412** by a customer, aircraft **2500** is scheduled for routine maintenance and service **2414,** which may include modification, reconfiguration, refurbishment, and other maintenance or service.

Each of the processes of aircraft manufacturing and service method **2400** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 25****,** an illustration of a block diagram of an aircraft is depicted in which an illustrative embodiment may be implemented. In this example, aircraft **2500** is produced by aircraft manufacturing and service method **2400** in **Figure 24****,** and may include airframe **2502** with plurality of systems **2504** and interior **2506.** Examples of systems **2504** include one or more of propulsion system **2508,** electrical system **2510,** hydraulic system **2512,** and environmental system **2514.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **2400** in **Figure 24****.** In one illustrative example, components or subassemblies produced in component and subassembly manufacturing **2406** in **Figure 24** may be fabricated or manufactured in a manner similar to components or subassemblies produced while aircraft **2500** is in service **2412** in **Figure 24****.** For example, components for the aircraft tracking system **200** in **Figure 2** may be manufactured in either of the stages.

In another illustrative example, aircraft tracking system **200** may be added to aircraft **202** during system integration **2408 or** maintenance and service **2414.** As yet another example, one or more apparatus embodiments, method embodiments, or a combination thereof may be utilized while aircraft **2500** is in service **2412,** during maintenance and service **2414** in **Figure 24****,** or both. For example, aircraft tracking system **200** in **Figure 2** may be used during flight of aircraft **2500** while in service **2412** or when being tested during maintenance and service **2414.**

Thus, the illustrative examples provide a method and apparatus for tracking an aircraft. For example, an illustrative example provides a method and apparatus for reporting state information about an aircraft. In the illustrative example, the reporting is performed in a manner that overcomes the technical problem with tampering of aircraft tracking systems. One or more technical solutions report state information about the aircraft based on a policy that defines priorities between commands from at least one of the crew or a ground source and the state identified by the aircraft tracking. The use of the policy increases the autonomy in an aircraft tracking system. The policy also still allows some influence from commands sent from at least one of the crew or a ground source in a manner that takes into account a desire to reduce tampering.

The description of the different illustrative embodiments has been presented for purposes of illustration and description, and is not intended to be exhaustive or limited to the embodiments in the form disclosed. The different illustrative examples describe components that perform actions or operations. In an illustrative embodiment, a component may be configured to perform the action or operation described. For example, the component may have a configuration or design for a structure that provides the component an ability to perform the action or operation that is described in the illustrative examples as being performed by the component.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Note: the following paragraphs describe further aspects of this disclosure:
A1. A method for reporting state information (222) for an aircraft (202), the method comprising:
   identifying a state (212) of the aircraft (202) using sensor data (210) received from an aircraft sensor system (206) in the aircraft (202); and
   transmitting the state information (222) at a reporting rate (224) set using the state (212) of the aircraft (202) identified from the sensor data (210), at least one of a crew command (214) or a ground command (218) when at least one of the crew command (214) is received from a crew interface (216) or the ground command (218) is received from a ground source (220), and a policy (518) defining priorities for reporting that are based on at least one of the crew command (214), the ground command (218), or the state (212) of the aircraft (202) identified from the sensor data (210).
A2. The method of paragraph A1, wherein the identifying step and the transmitting step are performed in an aircraft tracker (204) that comprises a behavior analyzer (502) that identifies the state (212) of the aircraft (202) using the sensor data (210) and a state information reporter (504) that transmits the state information (222) at the reporting rate (224) using the state (212) of the aircraft (202) identified from the sensor data (210) and the at least one of the crew command (214) or the ground command (218) when the at least one of the crew command (214) or the ground command (218) is received.
A3. The method of paragraph A2 further comprising:
   determining whether the state information (222) should be transmitted;
   identifying the reporting rate (224) using the state (212) of the aircraft (202) identified from the sensor data (210) and the at least one of the crew command (214) or the ground command (218) when the at least one of the crew command (214) or the ground command (218) is received;
   identifying the state information (222) for transmission; and
   transmitting the state information (222) at the reporting rate (224) when the state information (222) should be transmitted when a determination is present that the state information (222) should be transmitted.
A4. The method of paragraph A2 or A3, wherein the aircraft tracker (204) further comprises:
   the crew interface (216) configured to generate the crew command (214) and send the crew command (214) to the aircraft tracker (204).
A5. The method of any of paragraphs A1 - A4, wherein policies are present and further comprising:
   selecting the policy (518) from the policies based on a selection received in the ground command (218).
A6. The method of any of paragraphs A1 - A5, wherein the aircraft sensor system (206) is selected from at least one of a satellite navigation system, an inertial measurement unit, or an accelerometer system.
A7. The method of any of paragraphs A1 - A6, wherein the transmitting step comprises:
   transmitting the state information (222) at the reporting rate (224) set using the state (212) of the aircraft (202) identified from the sensor data (210) and the at least one of the crew command (214) or the ground command (218) when the at least one of the crew command (214) or the ground command (218) is received; and a location of the aircraft (202).
A8. The method of any of paragraphs A1 - A7, wherein the sensor data (210) is selected from at least one of power information, a location of the aircraft (202), or a number of parameters for a maneuver performed by the aircraft (202).
A9. The method of any of paragraphs A1 - A8, wherein the state information (222) includes information selected from at least one of the state (212) of the aircraft (202) identified, the sensor data (210), or information derived from the sensor data (210).
B1. An aircraft tracking system (200) comprising:
   a housing (209) that is tamper-resistant;
   a sensor system (206) located in the housing (209), wherein the sensor system (206) is configured to generate sensor data (210) about an aircraft (202);
   a behavior analyzer (502) located in the housing (209), wherein the behavior analyzer (502) is configured to identify a state (212) of the aircraft (202) using the sensor data (210);
   a state information reporter (504) located in the housing (209), wherein the state information reporter (504) is configured to report the state information (222) at a reporting rate (224) set using the state (212) of the aircraft (202) identified from the sensor data (210); at least one of a crew command (214) or a ground command (218) when the at least one of the crew command (214) or the ground command (218) is received; and a location of the aircraft (202); and
   a communications system (208) located in the housing (209), wherein the communications system (208) is configured to receive the ground command (218) and send the state information (222) transmitted by the state information reporter (504).
B2. The aircraft tracking system (200) of paragraph B1, wherein the sensor system (206) is selected from at least one of a satellite navigation system, an inertial measurement unit, or an accelerometer system.

## Claims

1. An apparatus comprising:
an aircraft tracker (204) configured to identify a state (212) of an aircraft (202) using sensor data (210) received from an aircraft sensor system (206) in the aircraft (202); receive a crew command (214) from a crew interface (216); receive a ground command (218) from a ground source (220); and transmit state information (222) at a reporting rate (224) set using the state (212) of the aircraft (202) identified from the sensor data (210), at least one of the crew command (214) or the ground command (218) when the at least one of the crew command (214) or the ground command (218) is received, and a policy (518) defining priorities for reporting that are based on at least one of the crew command (214), the ground command (218), or the state (212) of the aircraft (202) identified from the sensor data (210).

2. The apparatus of claim 1, wherein the aircraft tracker (204) comprises:
a behavior analyzer (502) configured to identify the state (212) of the aircraft (202) using the sensor data (210); and
a state information reporter (504) configured to transmit the state information (222) at the reporting rate (224) set using the state (212) of the aircraft (202) identified from the sensor data (210) and the at least one of the crew command (214) or the ground command (218) when the at least one of the crew command (214) or the ground command (218) is received.

3. The apparatus of claim 1 or claim 2 further comprising:
a transmit state identifier (500) configured to indicate whether the state information (222) should be transmitted; and
wherein the state information reporter (504) comprises:
a rate identifier (506) configured to identify the reporting rate (224) using the state (212) of the aircraft (202) identified from the sensor data (210) and the at least one of the crew command (214) or the ground command (218) when the at least one of the crew command (214) or the ground command (218) is received; and
a reporter (508) configured to identify the state information (222) for transmission and transmit the state information (222) at the reporting rate (224) when the transmit state identifier (500) indicates that the state information (222) should be transmitted.

4. The apparatus of any of claims 1 - 3, further comprising:
a crew interface (216) configured to generate the crew command (214) and send the crew command (214) to the aircraft tracker (204).

5. The apparatus of any of claims 1 - 4, wherein policies are present and the aircraft tracker (204) is configured to select the policy (518) in the policies based on a selection received in the ground command (218).

6. The apparatus of claim 2 or any of claims 3 to 5 when dependent upon claim 2, wherein in being configured to identify the state (212) of the aircraft (202) using the sensor data (210) received from the aircraft sensor system (206) in the aircraft (202), the behavior analyzer (502) is configured to identify the state (212) of the aircraft (202) using the sensor data (210) received from the aircraft sensor system (206) in the aircraft (202) and a policy (518) that defines state (212)s of the aircraft (202) based on the sensor data (210).

7. The apparatus of any of claims 1 - 6, wherein the aircraft sensor system (206) comprises at least one of a satellite navigation system, an inertial measurement unit, or an accelerometer system.

8. The apparatus of any of claims 1 - 7, wherein in being configured to transmit the state information (222), the aircraft tracker (204) is configured to transmit the state information (222) at the reporting rate (224) set using the state (212) of the aircraft (202) identified from the sensor data (210); the at least one of the crew command (214) or the ground command (218) when the at least one of the crew command (214) or the ground command (218) is received; and a location of the aircraft (202).

9. The apparatus of any of claims 1 - 8, wherein the sensor data (210) is selected from at least one of a location of the aircraft (202), altitude, attitude, power information, a number of parameters for a maneuver performed by the aircraft (202), airspeed, roll angle, roll rate, pitch angle, pitch rate, pressure, temperature, or fuel use.

10. The apparatus of any of claims 1 - 9 further comprising:
a housing (209), wherein the aircraft tracker (204) and the aircraft sensor system (206) are located inside the housing (209), and wherein the housing (209) is tamper-resistant.

11. The apparatus of any of claims 1 - 10, wherein the state information (222) includes information selected from at least one of the state (212) of the aircraft (202) identified, the sensor data (210), or information derived from the sensor data (210).

12. A method for reporting state information (222) for an aircraft (202), the method comprising:
identifying a state (212) of the aircraft (202) using sensor data (210) received from an aircraft sensor system (206) in the aircraft (202); and
transmitting the state information (222) at a reporting rate (224) set using the state (212) of the aircraft (202) identified from the sensor data (210), at least one of a crew command (214) or a ground command (218) when at least one of the crew command (214) is received from a crew interface (216) or the ground command (218) is received from a ground source (220), and a policy (518) defining priorities for reporting that are based on at least one of the crew command (214), the ground command (218), or the state (212) of the aircraft (202) identified from the sensor data (210).

13. The method of claim 12, wherein the identifying step and the transmitting step are performed in an aircraft tracker (204) that comprises a behavior analyzer (502) that identifies the state (212) of the aircraft (202) using the sensor data (210) and a state information reporter (504) that transmits the state information (222) at the reporting rate (224) using the state (212) of the aircraft (202) identified from the sensor data (210) and the at least one of the crew command (214) or the ground command (218) when the at least one of the crew command (214) or the ground command (218) is received.

14. The method of claim 13 further comprising:
determining whether the state information (222) should be transmitted;
identifying the reporting rate (224) using the state (212) of the aircraft (202) identified from the sensor data (210) and the at least one of the crew command (214) or the ground command (218) when the at least one of the crew command (214) or the ground command (218) is received;
identifying the state information (222) for transmission; and
transmitting the state information (222) at the reporting rate (224) when the state information (222) should be transmitted when a determination is present that the state information (222) should be transmitted.

15. The method of any of claims 12 - 14, wherein policies are present and further comprising:
selecting the policy (518) from the policies based on a selection received in the ground command (218).
